# EUROPEAN PATENT APPLICATION

(11) **EP 4 726 567 A1**
(43) Date of publication of application: **15.04.2026**
(21) Application number: 24844229.5
(22) Date of filing: 29.02.2024
(51) Int. Cl.: G06F 16/22

(54) **INDEX CREATION METHOD AND APPARATUS IN DISTRIBUTED SYSTEM**

(30) Priority: 24.07.2023 CN 202310916238
(71) Applicant: Huawei Technologies Co., Ltd., Shenzhen, Guangdong 518129 (CN)
(72) Inventor: ZHOU, Zhaoqi, Shenzhen, Guangdong 518129 (CN); WANG, Fang, Shenzhen, Guangdong 518129 (CN); ZHANG, Shujie, Shenzhen, Guangdong 518129 (CN)
(74) Representative: Pfenning, Meinig & Partner mbB
(86) International application number: PCT/CN2024/079444
(87) International publication number: WO 2025/020531

(57) **Abstract**

This application relates to the field of computer technologies, and discloses a method and an apparatus for creating an index in a distributed system, to implement metadata non-asynchronous update during online creation of a global secondary index, without introducing a third-party node/tool with high concurrent access load. In the solutions, during online creation of the global secondary index, a coordinator node first notifies a plurality of other nodes to configure metadata of the global secondary index, where the metadata includes a metadata version, and the configuration is used to update and/or generate the metadata. The coordinator node configures the metadata of the global secondary index on the coordinator node only when meeting a preset condition.

## Description

This application claims priority to Chinese Patent Application No. 202310916238.8, filed with the China National Intellectual Property Administration on July 24, 2023 and entitled "METHOD AND APPARATUS FOR CREATING INDEX IN DISTRIBUTED SYSTEM", which is incorporated herein by reference in its entirety.

### TECHNICAL FIELD

This application relates to the field of computer technologies, and in particular, to a method and an apparatus for creating an index in a distributed system.

### BACKGROUND

A distributed system includes several stations. These stations are also referred to as nodes or agents (Agents), and are connected on a communication network. Each node is an independent database system including its own database, central processing unit, terminal, and local database management system, can be considered as a union of a series of centralized database systems, and logically belongs to a unified system, but physically is a distributed structure.

In a distributed database, data in each data table is partitioned (Partitioned) or sharded (Sharded) according to a rule, and then is distributively stored on a plurality of different nodes. Herein, the data may be a plurality of records in the data table, and a database instance that runs on each node manages a record allocated to the node. For example, a column or a plurality of columns in the data table are used as a column of a distribution key (Distribution Key) of the data table, and then the data in the data table is partitioned or sharded based on hash values of the column of the distribution key. Then, the data in the data table after partitioning or sharding is stored on a plurality of different nodes based on the distribution key.

Currently, when data is queried in the database, if query is based on the distribution key of the data table, the desired user data can be quickly found. However, if query is based on any other column of a non-distribution key, a query request needs to be delivered to all nodes to summarize results returned by all the nodes and obtain a final query result. For a large-scale distributed system with many nodes, an entire query process requires to establish network communication with a large quantity of nodes, resulting in low query efficiency. Therefore, a global secondary index (global secondary index, GSI) needs to be introduced to support query based on other columns of the data table, so that the distributed database supports a flexible query capability in more dimensions. The global secondary index is a global index that takes effect on a data node in the distributed database, and can be created based on a specific requirement of a user. However, to avoid blocking data manipulation language (data manipulation language, DML) transaction processing of a user service, currently, the global secondary index GSI is usually created online, but it is difficult to ensure high performance or high availability (high availability, HA) during creation.

### SUMMARY

This application provides a method and an apparatus for creating an index in a distributed system, to ensure high performance or high availability during creation while implementing online creation of a global secondary index GSI in the distributed system.

To achieve the foregoing objectives, this application uses the following technical solutions.

According to a first aspect, a method for creating an index in a distributed system is provided and applied to a coordinator node in the distributed system. The distributed system further includes a plurality of other nodes, and the method includes: during online creation of a global secondary index, notifying the plurality of other nodes to configure metadata of the global secondary index, where the metadata includes a metadata version, and the configuration is used to update and/or generate the metadata; and when the coordinator node meets a preset condition, configuring the metadata of the global secondary index on the coordinator node.

Online creation of the global secondary index may be understood as that DML transaction processing of a user service and creation of the global secondary index can be performed in parallel, and do not block each other.

The coordinator node may be any coordinator node, in the distributed system, receiving a request for creating the global secondary index online. When another coordinator node in the distributed system receives the new request for creating the global secondary index online, the another coordinator node may also perform the method for creating the index in the distributed system provided in this solution.

Optionally, the plurality of other nodes notified by the coordinator node may include a data node, or may include another coordinator node.

Optionally, during online creation the global secondary index, to ensure consistency of the metadata of the global secondary index, from creation start to creation completion of the global secondary index, the metadata needs to sequentially transition to a plurality of version states. In an example, from creation start to creation completion of the global secondary index, the metadata sequentially transitions to a plurality of version states, which are respectively initial (absent), delete only (delete only), write only (write only (data reorganization data reorganization)), available (public), and the like. In another example, version states to which the metadata transitions may be simplified. For example, from creation start to creation completion of the global secondary index, the version states to which the metadata transitions may include only absent, write only (data reorganization), and public.

Optionally, the preset condition met by the coordinator node may be a condition that can be used to confirm that each of the plurality of other nodes completes the configuration of the metadata of the global secondary index. In this way, the coordinator node can confirm, by determining whether the preset condition is met, whether each of the plurality of other nodes completes the configuration of the metadata of the global secondary index.

In the solution provided in the first aspect, the coordinator node is directly responsible for an entire procedure of creating the global secondary index online, and during online creation of the global secondary index, the coordinator node first notifies the plurality of other nodes to configure the metadata of the global secondary index, and then the coordinator node synchronously configures the metadata of the global secondary index. This solution can implement online creation of the global secondary index in a manner of metadata synchronous update (non-asynchronous update), and ensure global consistency of the metadata. In addition, in this solution, a node that executes online creation of the global secondary index is not a specific node, but any coordinator node in the distributed system. This can avoid frequent increase of additional burdens on a node due to the node being fixed for executing online creation of the global secondary index, without introducing a third-party node/tool with high concurrent access load for coordinating metadata update. This can effectively ensure high concurrent performance in a large-scale cluster during online creation of the global secondary index.

In a possible implementation, the preset condition met by the coordinator node may be that completion feedback information returned by each of the plurality of other nodes is received. In this way, during online creation of the global secondary index in this solution, when the coordinator node notifies the plurality of other nodes to complete the configuration of the metadata, each of the plurality of other nodes can return one piece of indication information to the coordinator node when completing the configuration of the corresponding metadata, so that the coordinator node can confirm, in a timely manner, that the plurality of other nodes have completed the configuration of the metadata. It may be understood that, whether a metadata generation phase, a metadata update phase, or a waiting phase of all DML transactions is not limited herein. After completing a corresponding operation, each of the plurality of other nodes may return the piece of indication information to the coordinator node.

In a possible implementation, the preset condition that the coordinator node needs to meet may alternatively be waiting for preset processing duration. In this way, during online creation of the global secondary index in this solution, when the coordinator node notifies the plurality of other nodes to complete the configuration of the metadata, the coordinator node may assume, by default after waiting for the specific duration, that the plurality of other nodes all complete the configuration of the corresponding metadata, and automatically confirm that the plurality of other nodes completes the configuration of the metadata. It may be understood that, whether a metadata generation phase, a metadata update phase, or a waiting phase of all DML transactions is not limited herein. The coordinator node may automatically confirm, after waiting for the specific duration after notification, that the plurality of other nodes have completed the configuration.

In a possible implementation, the distributed system further includes a client. When the configuration is used to generate the metadata, a process of generating the metadata of the global secondary index during online creation of the global secondary index may include: receiving an index creation request from the client, where the index creation request indicates to create, online, the global secondary index associated with a field in a data table; in response to the index creation request, notifying the plurality of other nodes to create and initialize the metadata of the global secondary index and set the metadata version of the global secondary index to a first version; and when the coordinator node meets the preset condition, creating and initializing the metadata of the global secondary index on the coordinator node, and setting the metadata version of the global secondary index to the first version.

Optionally, the preset condition met by the coordinator node may be that setting feedback information returned by each of the plurality of other nodes is received. The setting feedback information returned by each node may indicate that creation and initialization of the metadata of the global secondary index on the node and setting to the first version are completed.

In this way, during online creation of the global secondary index in this solution, the coordinator node can complete initialization of the metadata and setting of the metadata version synchronously on the node (namely, the coordinator node that performs the method for creating the index in this solution) after performing notification and waiting for the plurality of other nodes to complete initialization of the metadata and setting of the metadata version in the metadata generation phase (initialization phase) of the global secondary index. Therefore, the coordinator node is used to implement initialization of the metadata of a non-asynchronous mechanism during online creation of the global secondary index, ensure global consistency of the metadata, and ensure high concurrent performance in a large-scale cluster.

Optionally, the first version may be a start version set in the metadata initialization phase, and may be a write only (write only) version or a delete only (delete only) version. This is not limited in this solution. For example, the first version may be another version.

In a possible implementation, when the configuration is used to update the metadata, a process of updating the metadata of the global secondary index during online creation of the global secondary index may include: when the coordinator node and the plurality of other nodes all complete setting the metadata version of the metadata of the global secondary index to a first version, notifying the plurality of other nodes to update the metadata version from the first version to a second version; and when the coordinator node meets the preset condition, updating the metadata version from the first version to the second version on the coordinator node.

Optionally, the preset condition met by the coordinator node may be that update feedback information returned by each of the plurality of other nodes is received. The update feedback information returned by each node may indicate that update to the second version of the metadata version of the global secondary index on the node is completed.

In this way, during online creation of the global secondary index in this solution, the coordinator node can complete update of the metadata and update of the metadata version synchronously on the node after performing notification and waiting for the plurality of other nodes to complete update of the metadata and update of the metadata version in the metadata update phase of the global secondary index. Therefore, the coordinator node is used to implement update of the metadata of a non-asynchronous mechanism during online creation of the global secondary index, ensure global consistency of the metadata, and ensure high concurrent performance in a large-scale cluster.

Optionally, the second version may be an intermediate compatible version set in the metadata update phase. This is not limited in this solution. For example, the second version may be a write only (write only) version. The first version may be a previous version of the second version, and may be the start version set in the metadata initialization phase, or may be a previous intermediate compatible version. For example, when the second version to be updated to is a write only (write only) version, the previous version may be a delete only (delete only) version.

In a possible implementation, when the configuration is used to update the metadata and the global secondary index is available after update, a process of updating the metadata of the global secondary index during online creation of the global secondary index may alternatively include: filling related data in a data table into the global secondary index when the coordinator node and the plurality of other nodes all complete setting the metadata version of the metadata of the global secondary index to a first version; when data filling of the global secondary index is completed, notifying the plurality of other nodes to update the metadata version from the first version to a second version; and when the coordinator node meets the preset condition, updating the metadata version from the first version to the second version on the coordinator node.

Optionally, the preset condition met by the coordinator node may be that update feedback information returned by each of the plurality of other nodes is received. The update feedback information returned by each node may indicate that update to the update version of the metadata version of the global secondary index on the node is completed.

In this way, during online creation of the global secondary index in this solution, after data filling of the global secondary index is completed, the coordinator node can enter a final metadata update phase of the global secondary index, to indicate that the global secondary index is successfully created and the global secondary index is available. In addition, the coordinator node can complete final update of the metadata and final update of the metadata version synchronously on the node after performing notification and waiting for the plurality of other nodes to complete final update of the metadata and final update of the metadata version in the final metadata update phase of the global secondary index. Therefore, the coordinator node is used to implement final update of the metadata of a non-asynchronous mechanism during online creation of the global secondary index, ensure global consistency of the metadata, and ensure high concurrent performance in a large-scale cluster.

Optionally, the second version may be a final version set in the metadata update phase. This is not limited in this solution. For example, the second version may be a publicly available (public) version. The version state indicates that the global secondary index is successfully created, and the global secondary index is in an available state. The first version may be a previous version of the second version, and may be the start version set in the metadata initialization phase, or may be a previous intermediate compatible version. For example, when the second version to be finally updated to is an available (public) version, the previous version may be a write only (write only) version.

In a possible implementation, after the coordinator node and the plurality of other nodes all complete setting to the first version of the metadata version in the metadata of the global secondary index, the method for creating the index in the distributed system in this application may further include: waiting for end of all transactions of the data table on the coordinator node and the plurality of other nodes. Then, the coordinator node performs the subsequent procedure. In this way, during online creation of the global secondary index in this solution, after all nodes (including the coordinator node and the plurality of other nodes) update to a version V*ₙ*, the coordinator node can first enter a phase of waiting for execution completion of a user DML transaction, to wait for completion of all currently active DML transactions, and then update to a next version V_{*n*+*1*}. In this way, during online creation of the global secondary index in this solution, the coordinator node can complete metadata non-asynchronous update according to a user DML transaction priority principle. This can ensure consistency between a base table and index data under the metadata non-asynchronous update mechanism, do not hinder normal execution of the user DML transaction, and ensure high availability during creation.

Optionally, when all transactions of the data table on the coordinator node and the plurality of other nodes end, the coordinator node may perform the foregoing subsequent procedure again. For example, when all the transactions of the data table on the coordinator node and the plurality of other nodes end, the coordinator node notifies again the plurality of other nodes to update the metadata of the global secondary index and update the metadata version of the global secondary index from the first version to the second version. Alternatively, when all the transactions of the data table on the coordinator node and the plurality of other nodes end, the coordinator node fills the related data in the data table into the global secondary index again.

In a possible implementation, the distributed system further includes a client, and the preset condition includes a first preset condition and a second preset condition. When the configuration is used to generate and update the metadata, a process of generating and updating the metadata of the global secondary index during online creation of the global secondary index includes: receiving an index creation request from the client, where the index creation request indicates to create, online, the global secondary index associated with a field in a data table; in response to the index creation request, notifying the plurality of other nodes to create and initialize the metadata of the global secondary index and set the metadata version of the global secondary index to a first version, where the first version indicates that the global secondary index is write only; when the coordinator node meets the first preset condition, creating and initializing the metadata of the global secondary index on the coordinator node, and setting the metadata version of the global secondary index to the first version; waiting for end of all transactions of the data table on the coordinator node and the plurality of other nodes, and then filling related data in the data table into the global secondary index; when data filling of the global secondary index is completed, notifying the plurality of other nodes to update the metadata version from the first version to a second version, where the second version indicates that the global secondary index is normally available; and when the coordinator node meets the second preset condition, updating the metadata version from the first version to the second version on the coordinator node.

Optionally, the first preset condition met by the coordinator node may be that setting feedback information returned by each of the plurality of other nodes is received. The setting feedback information returned by each node may indicate that setting to the first version of the metadata version of the global secondary index on the node is completed.

Optionally, the second preset condition met by the coordinator node may be that update feedback information returned by each of the plurality of other nodes is received. The update feedback information returned by each node may indicate that update to the second version of the metadata version of the global secondary index on the node is all completed.

In this way, during online creation of the global secondary index in this solution, after initialization of the metadata and setting of the metadata version on the coordinator node and the plurality of other nodes are completed by using the foregoing non-asynchronous mechanism, after waiting for end of all the transactions of the data table on the coordinator node and the plurality of other nodes, the coordinator node can directly enter a data filling phase to generate the global secondary index, and complete final update of the metadata and the metadata version on the coordinator node and the plurality of other nodes by using the foregoing non-asynchronous mechanism after data filling ends. The entire creation process requires only transition of two metadata version states. Therefore, in this solution, the coordinator node is used to implement metadata non-asynchronous update during online creation of the global secondary index, simplify a metadata version transition procedure, ensure global consistency of the metadata, and further ensure high performance and high availability in the creation process.

In a possible implementation, waiting for end of all the transactions of the data table on the coordinator node and the plurality of other nodes includes: notifying the plurality of other nodes to wait for completion of all the uncompleted transactions of the data table; and when the coordinator node meets a specified condition, waiting for completion of all the uncompleted transactions of the data table on the coordinator node.

Optionally, the specified condition met by the coordinator node may be that waiting feedback information returned by each of the plurality other nodes is received. The waiting feedback information returned by each node may indicate completion of waiting for all uncompleted transactions of the data table on the node.

In this way, during online creation of the global secondary index in this solution, the coordinator node can also perform implementation in a non-asynchronous manner in a phase of waiting for completion of all currently active DML transactions. That is, the coordinator node notifies and waits for the plurality of other nodes to complete waiting for all the DML transactions, and then synchronously completes waiting for all the DML transactions on the coordinator node.

In a possible implementation, notifying the plurality of other nodes to configure the metadata of the global secondary index includes: sending a structured query language SQL instruction to the plurality of other nodes, where the SQL instruction instructs the plurality of other nodes to configure the metadata of the global secondary index. In this way, during online creation of the global secondary index in this solution, the coordinator node can directly instruct, by using the SQL instruction, the plurality of other nodes to complete the configuration of the metadata of the global secondary index.

According to a second aspect, a distributed system is provided. The distributed system includes a coordinator node and a plurality of other nodes;
the coordinator node is configured to send an instruction to the plurality of other nodes during online creation of a global secondary index, where the instruction instructs the plurality of other nodes to configure metadata of the global secondary index, the metadata includes a metadata version, and the configuration is used to update and/or generate the metadata;
each of the plurality of other nodes is configured to: receive the instruction, and configure the metadata of the global secondary index on the node in response to the instruction; and
the coordinator node is further configured to configure the metadata of the global secondary index on the coordinator node when the coordinator node meets a preset condition.

The coordinator node may be any coordinator node, in the distributed system, receiving a request for creating the global secondary index online. Optionally, the plurality of other nodes notified by the coordinator node may include a data node, or may include another coordinator node.

Optionally, the preset condition met by the coordinator node may be a condition that can be used to confirm that each of the plurality of other nodes completes the configuration of the metadata of the global secondary index. In this way, the coordinator node can confirm, by determining whether the preset condition is met, whether each of the plurality of other nodes completes the configuration of the metadata of the global secondary index.

In the solution provided in the second aspect, for the distributed system including the coordinator node and the plurality of other nodes, any coordinator node can be directly responsible for an entire procedure of creating the global secondary index online. In addition, during online creation of the global secondary index, the coordinator node sends the instruction to the plurality of other nodes in the distributed system, to instruct the plurality of other nodes to perform an operation of configuring the metadata of the global secondary index. In this way, the plurality of other nodes can receive the instruction from the coordinator node, and respond to the instruction to perform the corresponding operation of configuring the metadata of the global secondary index. After confirming that the plurality of other nodes complete the configuration of the metadata of the global secondary index, the coordinator node synchronously configures the metadata of the global secondary index on the coordinator node. Therefore, this solution can implement online creation of the global secondary index in the distributed system in a manner of metadata synchronous update (non-asynchronous update), and ensure global consistency of the metadata. In addition, in this solution, a node that executes online creation of the global secondary index is not a specific node, but any coordinator node in the distributed system. This can avoid frequent increase of additional burdens on a node due to the node being fixed for executing online creation of the global secondary index, without introducing a third-party node/tool with high concurrent access load for coordinating metadata update. This can effectively ensure high concurrent performance in a large-scale cluster during online creation of the global secondary index in the distributed system.

In a possible implementation, each of the plurality of other nodes is further configured to: return completion feedback information to the coordinator node when completing the configuration of the metadata of the global secondary index on the node; and
the coordinator node is further configured to: receive the completion feedback information, and when receiving the completion feedback information returned by each of the plurality of other nodes, determine that the coordinator node meets the preset condition. In this way, in the distributed system including the coordinator node and the plurality of other nodes, when receiving the instruction from the coordinator node and in response to the instruction, completing the operation of configuring the metadata of the corresponding global secondary index, the plurality of other nodes in the distributed system can return one piece of indication information to the coordinator node, so that the coordinator node can confirm, in a timely manner, that the plurality of other nodes have completed the configuration of the metadata.

In a possible implementation, the coordinator node is further configured to determine, after waiting for preset processing duration, that the coordinator node meets the preset condition. In this way, during online creation of the global secondary index in this solution, when the coordinator node notifies the plurality of other nodes to complete the configuration of the metadata, the coordinator node may automatically assume, by default after waiting for the specific duration, that the plurality of other nodes all complete the configuration of the corresponding metadata.

In a possible implementation, when the configuration is used to generate the metadata, the instruction sent by the coordinator node to the plurality of other nodes in the distributed system may include a first instruction (for example, the first instruction information sent by the coordinator node in step S702), and the first instruction instructs the plurality of other nodes to generate the metadata of the global secondary index; the distributed system further includes a client;
the client is configured to send an index creation request, where the index creation request indicates to create, online, the global secondary index associated with a field in a data table;
the coordinator node is configured to: receive the index creation request, and send the first instruction to the plurality of other nodes in response to the index creation request;
each of the plurality of other nodes is configured to: receive the first instruction; and in response to the first instruction, create and initialize the metadata of the global secondary index on the node, and set the metadata version of the global secondary index to a first version; and
the coordinator node is further configured to: when the coordinator node meets the preset condition, create and initialize the metadata of the global secondary index on the coordinator node, and set the metadata version of the global secondary index to the first version.

In this way, in the distributed system including the coordinator node and the plurality of other nodes, when one coordinator node receives the global secondary index creation request from the client, the coordinator node can be directly responsible for the entire procedure of creating the global secondary index online. In this case, the coordinator node may start to enter a global secondary index metadata generation phase (initialization phase). That is, the coordinator node sends the first instruction to the plurality of other nodes in the distributed system, to instruct the plurality of other nodes to perform an operation of generating the global secondary index, and then synchronously completes generation of the metadata of the global secondary index on the coordinator node when determining that the plurality of other nodes complete generation of the metadata of the global secondary index. Therefore, the coordinator node that receives the global secondary index creation request is used to implement initialization of the metadata of a non-asynchronous mechanism during online creation of the global secondary index, ensure global consistency of the metadata, and ensure high concurrent performance in a large-scale cluster.

Optionally, each of the plurality of other nodes is further configured to return setting feedback information to the coordinator node when completing creation and initialization of the metadata of the global secondary index and setting to the first version of the metadata version on the node; and
the coordinator node is further configured to: receive the setting feedback information, and when receiving the setting feedback information returned by each of the plurality of other nodes, determine that the coordinator node meets the preset condition.

In a possible implementation, when the configuration is used to update the metadata, the instruction sent by the coordinator node to the plurality of other nodes in the distributed system may include a second instruction (for example, the fifth instruction information sent by the coordinator node in the specific implementation), and the second instruction instructs the plurality of other nodes to update the metadata of the global secondary index;
the coordinator node is configured to send the second instruction to the plurality of other nodes when the coordinator node and the plurality of other nodes all complete setting the metadata version of the metadata of the global secondary index to a first version;
each of the plurality of other nodes is configured to: receive the second instruction, and update the metadata version from the first version to a second version on the node in response to the second instruction; and
the coordinator node is further configured to: when the coordinator node meets the preset condition, update the metadata version from the first version to the second version on the coordinator node.

In this way, in the distributed system including the coordinator node and the plurality of other nodes, the coordinator node can send the second instruction to the plurality of other nodes in the distributed system in a global secondary index metadata update phase, to instruct the plurality of other nodes to perform an operation of updating the global secondary index. After determining that the plurality of other nodes complete update of the metadata of the global secondary index, the coordinator node synchronously completes update of the metadata of the global secondary index on the coordinator node. Therefore, the coordinator node that receives the global secondary index creation request is used to implement update of the metadata of a non-asynchronous mechanism during online creation of the global secondary index, ensure global consistency of the metadata, and ensure high concurrent performance in a large-scale cluster.

Optionally, each of the plurality of other nodes is further configured to return update feedback information to the coordinator node when completing update of the metadata version of the global secondary index to the second version on the node; and
the coordinator node is further configured to: receive the update feedback information, and when receiving the update feedback information returned by each of the plurality of other nodes, determine that the coordinator node meets the preset condition.

In a possible implementation, when the configuration is used to update the metadata and the global secondary index is available after update, the instruction sent by the coordinator node to the plurality of other nodes in the distributed system may include a second instruction (for example, the third instruction information sent by the coordinator node in step S707), and the second instruction instructs the plurality of other nodes to update the metadata of the global secondary index;
the coordinator node is configured to: fill related data in the data table into the global secondary index when the coordinator node and the plurality of other nodes all complete setting the metadata version of the metadata of the global secondary index to a first version; and send the second instruction to the plurality of other nodes when data filling of the global secondary index is completed;
each of the plurality of other nodes is configured to: receive the second instruction, and update the metadata version from the first version to a second version on the node in response to the second instruction; and
the coordinator node is further configured to: when the coordinator node meets the preset condition, update the metadata version from the first version to the second version on the coordinator node.

Optionally, each of the plurality of other nodes is further configured to return update feedback information to the coordinator node when completing update of the metadata version of the global secondary index to the second version on the node; and
the coordinator node is further configured to: receive the update feedback information, and when receiving the update feedback information returned by each of the plurality of other nodes, determine that the coordinator node meets the preset condition. In this way, in the distributed system including the coordinator node and the plurality of other nodes, after completing data filling of the global secondary index and entering a global secondary index final metadata update phase, the coordinator node can send the second instruction to the plurality of other nodes in the distributed system, to instruct the plurality of other nodes to perform an operation of finally updating the global secondary index. After determining that the plurality of other nodes complete update of the metadata of the global secondary index, the coordinator node synchronously completes final update of the metadata of the global secondary index on the coordinator node. Therefore, the coordinator node that receives the global secondary index creation request is used to implement final update of the metadata of a non-asynchronous mechanism during online creation of the global secondary index, ensure global consistency of the metadata, and ensure high concurrent performance in a large-scale cluster.

In a possible implementation, the coordinator node is further configured to: after the coordinator node and the plurality of other nodes all complete setting to the first version of the metadata version of the metadata of the global secondary index, wait for end of all transactions of the data table on the coordinator node and the plurality of other nodes. Then, the coordinator node performs the foregoing subsequent procedure. In this way, in the distributed system including the coordinator node and the plurality of other nodes, the coordinator node can complete metadata non-asynchronous update according to a user DML transaction priority principle. This can ensure consistency between a base table and index data under the metadata non-asynchronous update mechanism, do not hinder normal execution of the user DML transaction, and ensure high availability during creation.

In a possible implementation, the preset condition includes a first preset condition and a second preset condition, when the configuration is used to generate and update the metadata, the instruction sent by the coordinator node to the plurality of other nodes in the distributed system may include a first instruction and a second instruction, the first instruction instructs the plurality of other nodes to generate the metadata of the global secondary index, and the second instruction instructs the plurality of other nodes to update the metadata of the global secondary index; the distributed system further includes a client;
the client is configured to send an index creation request, where the index creation request indicates to create, online, the global secondary index associated with a field in a data table;
the coordinator node is configured to: receive the index creation request, and send the first instruction to the plurality of other nodes in response to the index creation request;
each of the plurality of other nodes is configured to: receive the first instruction; and in response to the first instruction, create and initialize the metadata of the global secondary index on the node, and set the metadata version of the global secondary index to a first version, where the first version indicates that the global secondary index is write only;
the coordinator node is further configured to: when the coordinator node meets the first preset condition, create and initialize the metadata of the global secondary index on the coordinator node, and set the metadata version of the global secondary index to the first version;
the coordinator node is further configured to: wait for end of all transactions of the data table on the coordinator node and the plurality of other nodes; and then fill related data in the data table into the global secondary index, and send the second instruction to the plurality of other nodes when data filling of the global secondary index is completed;
each of the plurality of other nodes is further configured to: receive the second instruction, and update the metadata version from the first version to a second version on the node in response to the second instruction, where the second version indicates that the global secondary index is normally available; and
the coordinator node is further configured to: when the coordinator node meets the second preset condition, update the metadata version from the first version to the second version on the coordinator node.

In this way, in the distributed system including the coordinator node and the plurality of other nodes, the coordinator node can complete the configuration of the metadata by using the non-asynchronous mechanism during online creation of the global secondary index, and the entire creation process requires only transition of two metadata version states. Therefore, the distributed system in this solution not only simplifies a metadata version transition process during online creation of the global secondary index, but also ensures global consistency of the metadata while simplifying the metadata version transition process; and follows the user DML transaction priority principle, does not execute online creation of the global secondary index on a fixed node, and ensures high performance and high availability during creation.

Optionally, each of the plurality of other nodes is further configured to return setting feedback information to the coordinator node when setting the metadata version of the global secondary index to the first version is completed on the node; and
the coordinator node is further configured to: receive the setting feedback information, and when receiving the setting feedback information returned by each of the plurality of other nodes, determine that the coordinator node meets the first preset condition.

Optionally, each of the plurality of other nodes is further configured to return update feedback information to the coordinator node when completing update of the metadata version of the global secondary index to the second version on the node; and
the coordinator node is further configured to: receive the update feedback information, and when receiving the update feedback information returned by each of the plurality of other nodes, determine that the coordinator node meets the second preset condition.

In a possible implementation, the instruction sent by the coordinator node to the plurality of other nodes in the distributed system may include a third instruction (for example, the sixth instruction information sent by the coordinator node in the specific implementation, and the second instruction information sent by the coordinator node in step S704), and the third instruction instructs the plurality of other nodes to wait for end of all the transactions of the data table;
the coordinator node is further configured to send the third instruction to the plurality of other nodes;
each of the plurality of other nodes is further configured to: receive the third instruction, and in response to the third instruction, wait for end of all the transactions of the data table on the node; and
the coordinator node is further configured to: when the coordinator node meets the specified condition, wait for end of all the transactions of the data table on the coordinator node.

In this way, in the distributed system including the coordinator node and the plurality of other nodes, the coordinator node can also complete, by using the foregoing non-asynchronous mechanism, waiting for completion of all the DML transactions during online creation of the global secondary index. That is, the coordinator node sends the third instruction to the plurality of other nodes in the distributed system, to instruct the plurality of other nodes to wait for all the DML transactions, and when determining that the plurality of other nodes complete waiting for all the DML transactions, synchronously complete waiting for all the DML transactions on the coordinator node.

Optionally, each of the plurality of other nodes is further configured to: when waiting for all uncompleted transactions of the data table on the node is completed, return waiting feedback information to the coordinator node; and
the coordinator node is further configured to: receive the waiting feedback information, and when receiving the waiting feedback information returned by each of the plurality of other nodes, determine that the coordinator node meets the specified condition.

In a possible implementation, the instruction is a structured query language SQL instruction. In this way, in the distributed system including the coordinator node and the plurality of other nodes, the coordinator node can send the SQL instruction to the plurality of other nodes in the distributed system, to instruct the plurality of other nodes to perform the operation of configuring the metadata of the global secondary index.

According to a third aspect, an apparatus for creating an index in a distributed system is provided and used in a coordinator node in the distributed system. The distributed system further includes a plurality of other nodes, and the apparatus includes: a processing unit, configured to: during online creation of a global secondary index, notify the plurality of other nodes to configure metadata of the global secondary index, where the metadata includes a metadata version, and the configuration is used to update and/or generate the metadata; and
the processing unit is further configured to configure the metadata of the global secondary index on the coordinator node when the coordinator node meets a preset condition.

In a possible implementation, the receiving unit is further configured to receive completion feedback information. The processing unit is further configured to: when receiving the completion feedback information returned by each of the plurality of other nodes, determine that the coordinator node meets the preset condition.

In a possible implementation, the processing unit is further configured to determine, after waiting for preset processing duration, that the coordinator node meets the preset condition.

In a possible implementation, the distributed system further includes a client. When the configuration is used to generate the metadata, the apparatus for creating the index in the distributed system may further include: a receiving unit, configured to receive an index creation request from the client, where the index creation request indicates to create, online, the global secondary index associated with a field in a data table. The processing unit is configured to: in response to the index creation request, notify the plurality of other nodes to create and initialize the metadata of the global secondary index, and set the metadata version of the global secondary index to a first version. The processing unit is further configured to: when the coordinator node meets the preset condition, create and initialize the metadata of the global secondary index on the coordinator node, and set the metadata version of the global secondary index to the first version.

In a possible implementation, the receiving unit is further configured to receive setting feedback information. The processing unit is further configured to: when receiving the setting feedback information returned by each of the plurality of other nodes, determine that the coordinator node meets the preset condition. The setting feedback information returned by each node may indicate that creation and initialization of the metadata of the global secondary index on the node and setting to the first version are completed.

In a possible implementation, when the configuration is used to update the metadata, the processing unit is configured to: when the coordinator node and the plurality of other nodes all complete setting the metadata version of the metadata of the global secondary index to a first version, notify the plurality of other nodes to update the metadata version from the first version to a second version. The processing unit is further configured to: when the coordinator node meets the preset condition, update the metadata version from the first version to the second version on the coordinator node.

In a possible implementation, the receiving unit is further configured to receive update feedback information. The processing unit is further configured to: when receiving the update feedback information returned by each of the plurality of other nodes, determine that the coordinator node meets the preset condition. The update feedback information returned by each node may indicate that update to the second version of the metadata version of the global secondary index on the node is completed.

In a possible implementation, when the configuration is used to update the metadata, the processing unit is configured to: fill related data in the data table into the global secondary index when the coordinator node and the plurality of other nodes all complete setting the metadata version of the metadata of the global secondary index to a first version, and notify the plurality of other nodes to update the metadata version from the first version to a second version when data filling of the global secondary index is completed. The processing unit is further configured to: when the coordinator node meets the preset condition, update the metadata version from the first version to the second version on the coordinator node.

In a possible implementation, the processing unit is further configured to wait for end of all transactions of the data table on the coordinator node and the plurality of other nodes.

In a possible implementation, the distributed system further includes a client, and the preset condition includes a first preset condition and a second preset condition. When the configuration is used to generate and update the metadata, the apparatus for creating the index in the distributed system may further include: a receiving unit, configured to receive an index creation request from the client, where the index creation request indicates to create, online, the global secondary index associated with a field in a data table. The processing unit is configured to: in response to the index creation request, notify the plurality of other nodes to create and initialize the metadata of the global secondary index, and set the metadata version of the global secondary index to a first version, where the first version indicates that the global secondary index is write only; and when the coordinator node meets the first preset condition, create and initialize the metadata of the global secondary index on the coordinator node, and set the metadata version of the global secondary index to the first version. The processing unit is further configured to: wait for end of all transactions of the data table on the coordinator node and the plurality of other nodes, and then fill related data in the data table into the global secondary index. The processing unit is further configured to: when data filling of the global secondary index is completed, notify the plurality of other nodes to update the metadata version from the first version to a second version, where the second version indicates that the global secondary index is normally available; and when the coordinator node meets the second preset condition, update the metadata version from the first version to the second version on the coordinator node.

In a possible implementation, the receiving unit is further configured to receive setting feedback information. The processing unit is further configured to: when receiving the setting feedback information returned by each of the plurality of other nodes, determine that the coordinator node meets the first preset condition. The setting feedback information returned by each node may indicate that creation and initialization of the metadata of the global secondary index on the node and setting to the first version are completed.

In a possible implementation, the receiving unit is further configured to receive update feedback information. The processing unit is further configured to: when receiving the update feedback information returned by each of the plurality of other nodes, determine that the coordinator node meets the second preset condition. The update feedback information returned by each node may indicate that update to the second version of the metadata version of the global secondary index on the node is completed.

In a possible implementation, the processing unit is further configured to: notify the plurality of other nodes to wait for end of all transactions of the data table, and when the coordinator node meets the specified condition, wait for end of all the transactions on the data table on the node.

In a possible implementation, the receiving unit is further configured to receive waiting feedback information. The processing unit is further configured to: when receiving the waiting feedback information returned by each of the plurality of other nodes, determine that the coordinator node meets the specified condition. The waiting feedback information returned by each node may indicate completion of waiting for all uncompleted transactions of the data table on the node.

In a possible implementation, the processing unit is configured to: send a structured query language SQL instruction to the plurality of other nodes, where the SQL instruction instructs the plurality of other nodes to configure the metadata of the global secondary index.

According to a fourth aspect, a coordinator node in a distributed system is provided. The coordinator node includes one or more processors and one or more memories. The one or more memories store at least one computer program. The at least one computer program is loaded and executed by the one or more processors to perform the method for creating the index in the distributed system according to any one of the first aspect and the possible designs of the first aspect.

According to a fifth aspect, a chip system is provided. The chip system includes one or more interface circuits and a processor. The interface circuit and the processor are interconnected through a circuit. The interface circuit is configured to: receive a signal, and send the signal to the processor, where the signal includes instructions. When the processor executes the instructions, the chip system performs the method for creating the index in the distributed system according to any one of the first aspect and the possible designs of the first aspect.

According to a sixth aspect, a computer-readable storage medium is provided, and includes computer instructions. When the computer instructions are run on a computer, the computer is enabled to perform the method for creating the index in the distributed system according to any one of the first aspect and the possible designs of the first aspect.

It may be understood that for beneficial effect that can be achieved by the apparatus according to the third aspect, the coordinator node according to the fourth aspect, the chip system according to the fifth aspect, and the computer storage medium according to the sixth aspect, refer to beneficial effect according to any one of the first aspect and the possible designs of the first aspect. Details are not described herein again.

### BRIEF DESCRIPTION OF DRAWINGS

FIG. 1 is a diagram 1 of a system of a method for creating an index according to a related technology;
FIG. 2 is a diagram 2 of a system of a method for creating an index according to a related technology;
FIG. 3 is a diagram 3 of a system of a method for creating an index according to a related technology;
FIG. 4 is a diagram 4 of a system of a method for creating an index according to a related technology;
FIG. 5 is a diagram of an architecture of a system of a method for creating an index in a distributed system according to an embodiment of this application;
FIG. 6 is a schematic flowchart of a software architecture for a method for creating an index in a distributed system according to an embodiment of this application;
FIG. 7 is a schematic flowchart of a method for creating an index in a distributed system according to an embodiment of this application;
FIG. 8A and FIG. 8B are a diagram of a time sequence of a method for creating an index in a distributed system according to an embodiment of this application;
FIG. 9 is a diagram of data distribution in a distributed system according to an embodiment of this application;
FIG. 10 is a diagram of another data distribution according to an embodiment of this application;
FIG. 11 is a schematic flowchart of a method for synchronously deleting a tuple in a distributed system according to an embodiment of this application;
FIG. 12 is a schematic flowchart of a method for synchronously deleting a tuple and then inserting a tuple in a distributed system according to an embodiment of this application;
FIG. 13 is a diagram of data partitions in a distributed system according to an embodiment of this application; and
FIG. 14 is a diagram of data partitions in another distributed system according to an embodiment of this application.

### DESCRIPTION OF EMBODIMENTS

The following describes technical solutions in embodiments of this application with reference to the accompanying drawings in embodiments of this application. The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. It should be understood that, in this application, "at least one" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural.

For reference and clarity, technical terms, acronyms, or abbreviations used in the following are summarized and explained as follows:
An index (Index) is a data structure for sorting values of one or more columns in a data table, and is used to assist in quickly querying and updating data in the data table. The index functions as a directory of a book, and required content can be quickly found based on a page number in the directory.

A data manipulation language DML is a language used to perform operations (such as query, and insert/update/delete) on data in a database.

A distribution key is a column (or a combination of a plurality of columns), in a distributed database, used to determine a database partition storing a specific data row.

An index key (Index Key) is a column (or a combination of a plurality of columns) that identifies an index item.

A base table (Base Table), also referred to as a base table, or a data table, is metadata permanently stored in a database, and is distinguished from an index, a view, and the like.

A snapshot (Snapshot) of a database is a read-only static view that records data information in the database at a specific time point.

Metadata (Schema) describes some data of a database, including a metadata version, a database name, a database character set, a table name, a table size, a quantity of record rows in a table, a table character set, a table field, a table index, a table description, a field type, field precision, a field description, and the like.

A memory table (Memtable) is a data structure used to store latest written data in a log structured merge tree (log structured merge tree, LSM) storage structure, and is usually stored in a memory. When an accumulated amount of written data reaches a specific threshold, the data is merged into a sorted strings table (SSTable) in a background merge process.

A sorted strings table (SSTable) is a data structure used to store historical data in an LSM storage structure, and is usually stored on a disk.

A global secondary index (global secondary index, GSI), also referred to as a global index, is a type of index. The index is a data structure for sorting in a database system, and is used to assist in quickly querying and updating data in a base table of the database. The global secondary index is a global index that takes effect on a data node in a distributed database. An index key (index key) is a column (or a combination of a plurality of columns) that identifies an index item in a global secondary index.

A coordinator node (coordinator node, CN) is a node that performs data scheduling. The coordinator node may manage a data node that establishes a communication connection to the coordinator node, and perform data scheduling between data nodes.

A data node (data node, DN) is a node configured to process and store data. The data node may be a node that receives data scheduling information of a coordinator node, and receives and sends data or performs data processing and storage based on the received data scheduling information.

Currently, in a distributed database, creation of a global secondary index GSI usually takes several hours or even days when there is a large amount of data. To avoid blocking DML transaction processing of a user service, the global secondary index GSI needs to be created online. That is, DML transaction processing of a user service can be performed concurrently during creation, to avoid mutual blocking.

To implement online creation of the distributed global secondary index, currently, a multi-version metadata asynchronous update algorithm is usually used. To be specific, at a same time point during creation, two and at most two valid metadata versions are allowed to exist on nodes, and a specific node performs index creation. After the specific node updates a metadata version of the node, another node correspondingly updates a metadata version asynchronously. This can implement online creation of the distributed global secondary index on the basis of ensuring data consistency. Data consistency in this solution means that after the index is created on a base table in the distributed database, the index in a corresponding column is consistent with data in the base table, to prevent the index and the base table feeding back different processing results for a same task request.

To ensure that at most two valid metadata versions exist on nodes, in a solution, metadata asynchronous update is implemented using a lease mechanism. To be specific, after updating a metadata version, a specific node configured to perform index creation waits for another node to asynchronously update a metadata version within one lease time. If the node fails to perform update, the node is considered to exit processing unexpectedly.

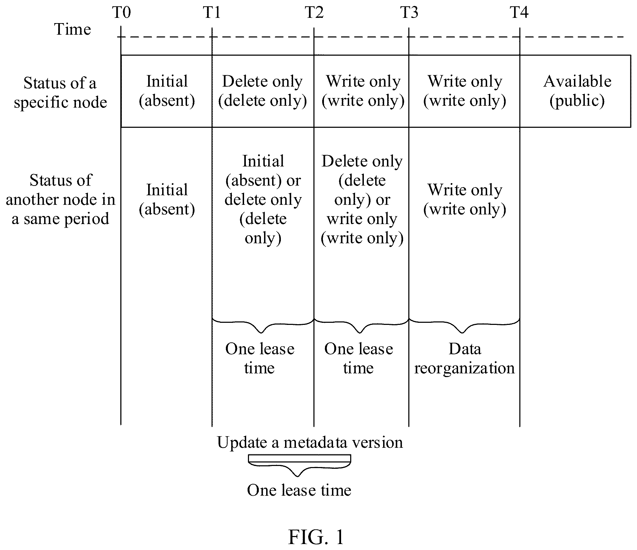

For example, as shown in FIG. 1, from start of index creation to completion of creation, metadata sequentially transitions to a plurality of version states, which are respectively initial (absent), delete only (delete only), write only (write only (data reorganization data reorganization)), and available (public). The version absent indicates that an index is not initialized and is completely invisible. The version delete only indicates that when a delete operation is performed on a piece of data in a base table, if the data exists in the index, the data is deleted from the index. The version write only indicates that when a delete/insert/update operation is performed on a piece of data in a base table, the corresponding operation is also performed on the data in the index. Data reorganization indicates a process of filling the index with data in the base table. The version public indicates that creation is complete and the index can be started to be used to accelerate query.

FIG. 1 shows a solution of implementing metadata asynchronous update using a lease mechanism.

First, a GSI creation command is transferred to a specific node, to instruct the specific node to perform index creation.

At a time T0, the specific node configured to perform index creation creates and initializes index-related metadata, sets a metadata version to absent, and starts to wait for one lease time. Another node obtains the metadata version absent within one lease time and updates the metadata version of the node.

At a time T1, one lease time ends. The specific node updates the metadata version to delete only and starts to wait for one lease time. Another node starts to obtain the metadata version delete only and updates the metadata version of the node.

At a time T2, one lease time ends. The specific node updates the metadata version to write only and starts to wait for one lease time. Another node starts to obtain the metadata version write only and updates the metadata version of the node.

At a time T3, one lease time ends. The specific node obtains a current snapshot and fills data in a base table under the snapshot into an index.

Finally, at a time T4, filling the data into the index ends. The specific node updates the metadata version to public. Another node starts to obtain the metadata version public. The index creation ends.

It can be learned that during entire index creation, metadata is updated asynchronously. To be specific, after the specific node configured to perform index creation performs update to a metadata version V*ₙ* of the specific node, another node asynchronously refreshes to the latest metadata version. After confirming that all active nodes perform update to the metadata version V*ₙ*, the specific node can perform update to a next metadata version V_{*n*+1}. In addition, an adjacent metadata version compatibility principle is followed during entire index creation. To be specific, during creation, two and at most two adjacent valid metadata versions are allowed to exist on nodes at a same time point. This can ensure that active transactions holding non-adjacent metadata versions do not exist in the distributed database, and ensure consistency of data between the base table and the index after the index is created.

However, for the solution of implementing metadata asynchronous update using the lease mechanism shown in FIG. 1, after the specific node configured to perform index creation performs update to the metadata version V*ₙ* of the node, the specific node needs to wait for one lease time (usually lasting for several minutes) before automatically updating to the metadata version V_{*n*+1}. This enables the another node need to actively obtain the metadata version V*ₙ* within one lease time for update. If the node fails to obtain the metadata version, the node exits running actively, a transaction being processed is forcibly stopped and rolled back, and processing of the node is handed over to a background service for attempt to re-obtain the metadata version. In addition, to implement online creation of the GSI, duration for synchronizing the DML transaction during creation cannot be longer than one lease time. Otherwise, the node terminates the transaction and rolls back the transaction. This ensure that when the specific node performs update to the metadata version V_{*n*+1}, there is no transaction holding a metadata version V_{*n*-*1*} of the node still being executed.

Therefore, it can be learned that if the solution of implementing metadata asynchronous update using the lease mechanism is used, index creation takes at least three lease times, even when a data amount is small. In addition, to ensure the adjacent metadata version compatibility principle, maximum execution duration of the DML transaction is also limited in this solution. Further, if the node cannot perform update to a latest metadata version within one lease time, the node needs to exit running, and the DML transaction being processed needs to be forcibly terminated and rolled back. As a result, user services are affected. Therefore, although the solution of implementing metadata asynchronous update using the lease mechanism shown in FIG. 1 can implement online creation of the GSI and ensure data consistency, minimum execution duration of creation is limited, the maximum execution duration of the DML transaction is limited, and high availability cannot be ensured.

As another solution, metadata asynchronous update may further be implemented by using a third-party component/tool. To be specific, after a specific node configured to perform index creation updates a metadata version, a latest metadata version is uploaded to the third-party component/tool. The third-party component/tool is responsible for synchronizing the latest metadata version to another node, and then giving feedback to the specific node.

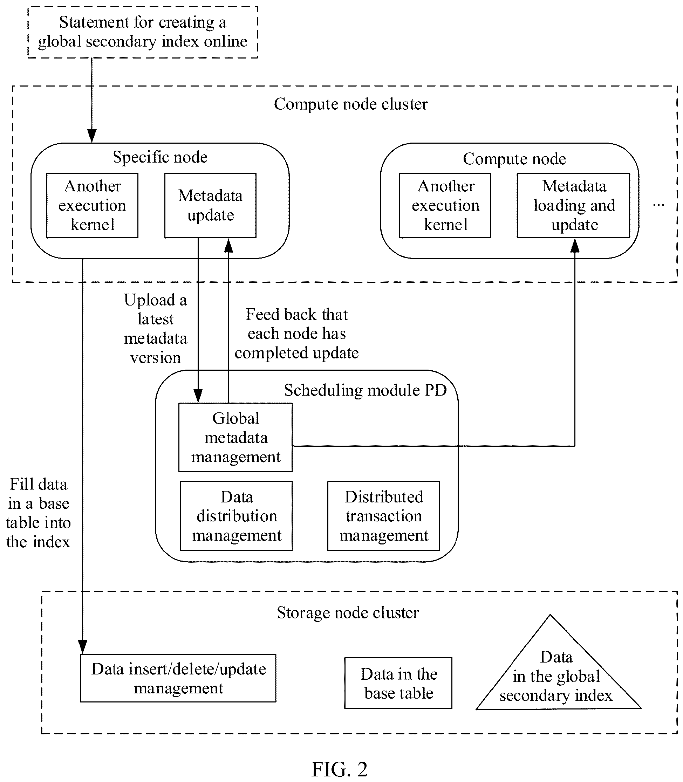

In an example, FIG. 2 shows a solution of implementing metadata asynchronous update using a scheduling module (placement driver, PD). From start of index creation to completion of creation, metadata needs to follow an adjacent metadata version compatibility principle and needs to sequentially transition to a plurality of version states, which are respectively absent, delete only, write only, data reorganization, and public.

As shown in FIG. 2, first, a GSI creation command is transferred to a specific node, to instruct the specific node to perform index creation. Then, the specific node configured to perform index creation obtains the metadata and waits for completion of a currently active old transaction. After waiting ends, the index-related metadata is created and initialized. The metadata version is updated to absent and then the metadata version absent is uploaded to a PD (third-party tool). The PD pushes the metadata version to another node. Each node waits for completion of the currently active old transaction and performs update to the metadata version from the PD. Each node gives feedback to the PD after completion, and the PD gives feedback to the specific node. The specific node performs update to enter the metadata version delete only.

The foregoing steps are repeated until the specific node performs update to enter the metadata version data reorganization. The specific node waits for completion of a currently active old transaction and then obtains a current snapshot, and fills data in a base table under the snapshot into an index.

Then, filling the data into the index ends, and the specific node uploads the metadata version data reorganization to the PD. The PD pushes the metadata version data reorganization to the another node. Each node waits for completion of a currently active old transaction and performs update to the metadata version data reorganization from the PD. Each node gives feedback to the PD after completion. After receiving the feedback from the PD, the specific node performs update to enter the metadata version public. Index creation ends. The specific node uploads the metadata version public to the PD, and the PD pushes the metadata version public to another node.

It can be learned that for the solution of coordinating metadata asynchronous update using the third-party tool PD shown in FIG. 2, after the specific node configured to perform index creation performs update to a metadata version V*ₙ* of the node, the specific node needs to upload a state of the metadata version V*ₙ* of the node to the PD. After pushing the version V*ₙ* to the another node and confirming that the node successfully performs update, the PD gives feedback to the specific node. After receiving the feedback from the PD, the specific node can enter a metadata version *Vₙ₊₁.* In addition, to implement online creation of the GSI, this solution follows a user DML transaction priority principle. To be specific, after performing update to enter the version V*ₙ*, the specific node needs to obtain a metadata lock and wait for completion of the transaction (end of a transaction whose metadata version≤V_{*n*-*1*}). Then, the specific node can enter the version *Vₙ₊₁.*

However, for the PD (one primary node and two standby nodes), as shown in FIG. 2, the PD is responsible for meta information management in a distributed system, and has already undertaken many high-load and high-network communication tasks, for example, global metadata management, used to store metadata information (including data distribution, a cluster topology structure, and the like); distributed transaction management, used to allocate transaction sequence numbers to distributed transactions; and data distribution management, used to deliver a data scheduling command to a specific node based on real-time data distribution of each storage node, and the like.

Therefore, it can be learned that if the solution of coordinating metadata asynchronous update using the third-party tool PD is used, although it can implement online creation of the GSI and ensure data consistency, all nodes in the distributed system need to be frequently and stably connected to the primary node of the PD. This introduces an additional burden for index online creation to the PD, and consequently high concurrent performance in a large-scale cluster environment is affected, and high concurrent performance during creation cannot be ensured.

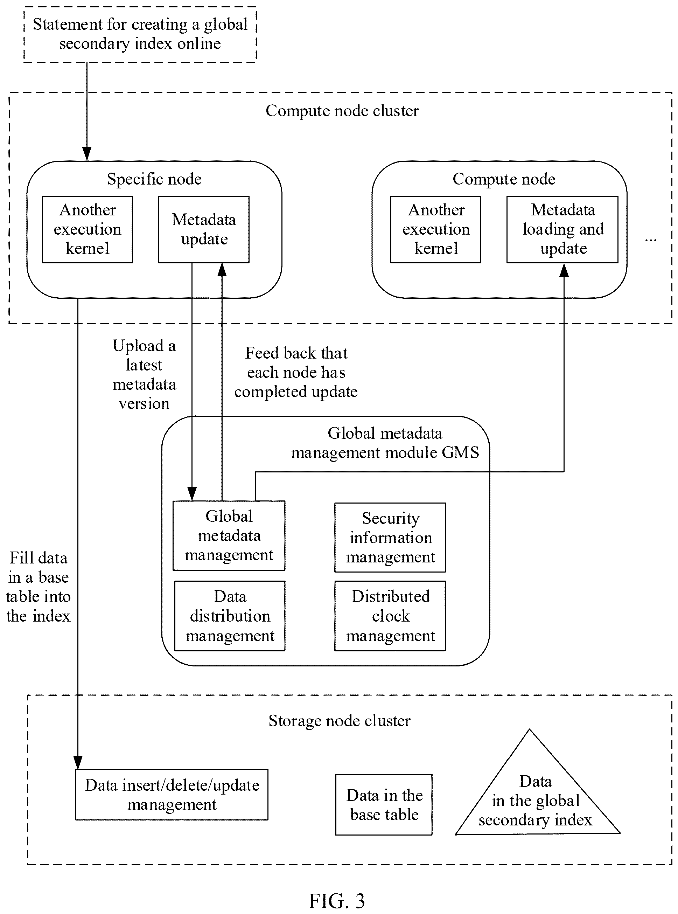

In another example, FIG. 3 shows a solution of implementing metadata asynchronous update using a global metadata management module (global meta service, GMS). From start of index creation to completion of creation, metadata needs to follow an adjacent metadata version compatibility principle and needs to sequentially transition to a plurality of version states, which are respectively absent, delete only, write only, data reorganization, and public.

As shown in FIG. 3, first, a GSI creation command is transferred to a specific node, to instruct the specific node to perform index creation. Then, the specific node configured to perform index creation creates and initializes the index-related metadata, updates a metadata version to absent, uploads the metadata version absent to the GMS (a third-party tool), and waits for completion of execution of a DML transaction holding an old version. The GMS pushes the metadata version absent to another node. Each node waits for completion of the currently active old transaction and performs update to the metadata version from the GMS. Each node gives feedback to the GMS after completion. The GMS confirms completion of update of the another node and gives feedback to the specific node. The specific node performs update to enter the metadata version delete only.

The foregoing steps are repeated until the specific node performs update to enter the metadata version data reorganization. The specific node obtains a current snapshot, and fills data in a base table under the snapshot into an index.

After filling the data into the index ends, the specific node uploads the metadata version to the GMS and waits for completion of execution of the DML transaction holding the old version. The GMS pushes the metadata version to the another node. Each node waits for completion of the currently active old transaction and performs update to the metadata version data reorganization from the GMS. Each node gives feedback to the GMS after completion. After receiving the feedback from the GMS, the specific node performs update to enter the metadata version public. Index creation ends.

It can be learned that for the solution of coordinating metadata asynchronous update using the third-party tool GMS shown in FIG. 3, after the specific node configured to perform index creation performs update to a metadata version V*ₙ* of the node, the specific node also needs to upload a state of the metadata version V*ₙ* of the node to the GMS. After pushing the version V*ₙ* to the another node and confirming that the node successfully performs update, the GMS gives feedback to the specific node. After receiving the feedback from the GMS, the specific node can enter a metadata version *Vₙ₊₁.* In addition, to implement online creation of the GSI, this solution also follows a user DML transaction priority principle. To be specific, after performing update to enter the version V*ₙ*, the specific node needs to obtain a metadata lock and wait for completion of the transaction (end of a transaction whose metadata version≤V_{*n*-*1*}). Then, the specific node can enter a version *Vₙ₊₁.*

However, for the GMS (one primary node and two standby nodes), as shown in FIG. 3, the GMS is responsible for meta information management in a distributed system, and has already undertaken many high-load and high-network communication tasks, for example, global metadata management, used to store global metadata information; distributed global clock management, used to provide a global time service; security information management, used to maintain security information such as an account and a permission; data distribution management, used to deliver a data redistribution scheduling command to a node; resource scheduling, used to add or delete a node; and the like.

Therefore, it can be learned that if the solution of coordinating metadata asynchronous update using the third-party tool GMS is used, although it can implement online creation of the GSI and ensure data consistency, all nodes in the distributed system also need to be frequently and stably connected to the primary node of the GMS. This introduces an additional burden for index online creation to the GMS, and consequently high concurrent performance in a large-scale cluster environment is affected, and high concurrent performance during creation cannot be ensured.

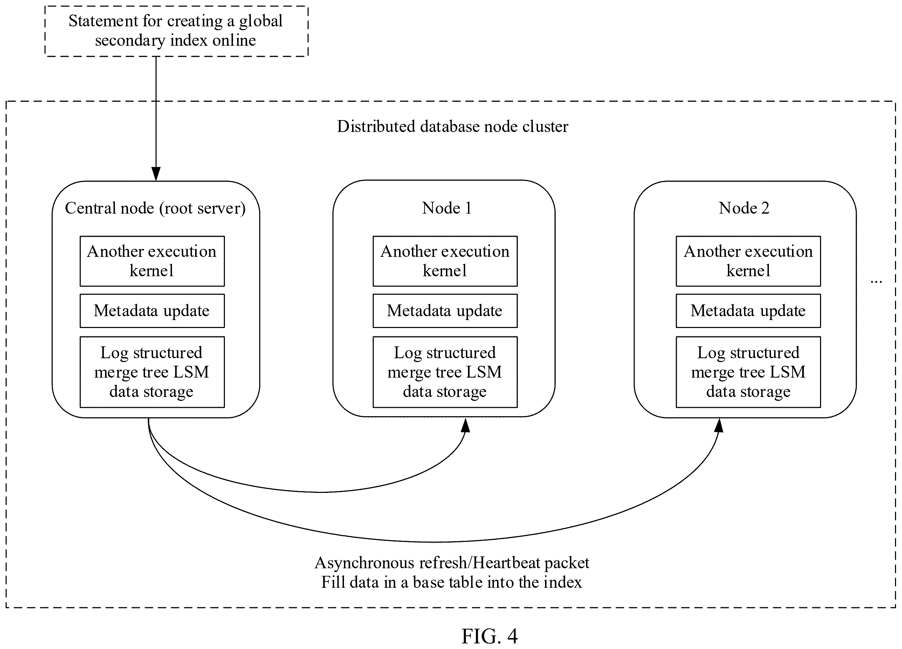

In still another example, FIG. 4 shows a solution of implementing metadata asynchronous update using a central node root server. From start of index creation to completion of creation, metadata still needs to follow an adjacent metadata version compatibility principle and still needs to sequentially transition to a plurality of version states, which are respectively absent, write only (data reorganization), and public. It may be understood that this type of distributed database can simplify metadata version transition by using a log structured merge tree (log structured merge tree, LSM) data storage architecture while still ensuring data consistency.

As shown in FIG. 4, first, a GSI creation command is transferred to a central node root server (a third-party node), and the root server performs index creation. Then, the root server initializes the index-related metadata and sets a metadata version to absent.

Then, the root server updates the metadata version to write only. The root server starts to wait for completion of execution of a DML transaction holding an old version and asynchronously refreshes the metadata version to other nodes.

Then, after waiting ends, the root server obtains a current snapshot, and fills data in a base table under the snapshot into an index.

Finally, after filling completes, if necessary, consistency between the base table and the index is verified. After filling and verification end, the root server confirms that the other nodes have updated the metadata version and have waited for end of execution of DML transactions holding the old version. The root server updates the metadata version to public and asynchronously refreshes the metadata version public to the other nodes. Index creation ends.

It can be learned that for the solution of coordinating metadata asynchronous update using the third-party node root server node shown in FIG. 4, the index creation command needs to be delivered to the root server node, and during creation, the root server node first updates a metadata version V*ₙ* of the node, and then notifies the other nodes to asynchronously refresh the metadata version. In addition, the other nodes can also check and refresh the version by using heartbeat packets to the root server node. In addition, to implement online creation of the GSI, this solution also follows a user DML transaction priority principle. To be specific, after performing update to enter the version V*ₙ*, the root server node needs to obtain a metadata lock and wait for completion of the transaction (end of a transaction whose metadata version≤V_{*n*-*1*}). Then, the root server node can enter a version *Vₙ₊₁*.

However, the root server node (one primary node and a plurality of standby nodes) is a general control service node in a distributed system, and has already undertaken many high-load and high-network communication tasks, for example, metadata management, can be used to schedule and manage a data definition language (data definition language, DDL) statement; data distribution management, can be used to determine data distribution location information; resource balancing management, can be used to manage migration of resources between nodes; resource scheduling management, can be used to add or delete a node; and the like.

Therefore, it can be learned that if the solution of coordinating metadata asynchronous update using the third-party node root server node is used, although it can implement online creation of the GSI and ensure data consistency, all nodes in the distributed system also need to be frequently and stably connected to the primary node of the root server. This introduces an additional burden for index online creation to the root server, and consequently high concurrent performance in a large-scale cluster environment is affected, and high concurrent performance during creation cannot be ensured.

In conclusion, if the lease mechanism is used to implement online creation of the global secondary index GSI, a node that cannot successfully update metadata within one lease time will exit node cluster processing, and a user DML transaction being performed on the node is terminated and rolled back. As a result, high availability cannot be ensured. If the third-party component/tool is used to implement online creation of the global secondary index GSI, flexibility of connecting to all nodes in a cluster is required. Therefore, the global metadata management module or central node is usually used as the third-party component/tool. However, the global metadata management module or central node has already undertaken many high-load and high-network communication tasks, for example, data distribution management and distributed transaction management. The additional burden for index online creation affects high concurrent performance of the large cluster. Therefore, the current solution for creating the global secondary index (GSI) online cannot ensure high availability or high concurrent performance.

To resolve the foregoing problem, embodiments of this application provide a method for creating an index in a distributed system, to implement online creation of the global secondary index GSI based on a metadata non-asynchronous update manner, and ensure high availability or high concurrent performance during creation while ensuring data consistency.

It may be understood that the method for creating the index in the distributed system provided in embodiments of this application is applicable to various distributed system applications such as a distributed domain name system (domain name system, DNS), a distributed router system, a distributed database, a distributed file system, distributed computing, a distributed search engine, and a distributed cache. This is not limited in embodiments of this application.

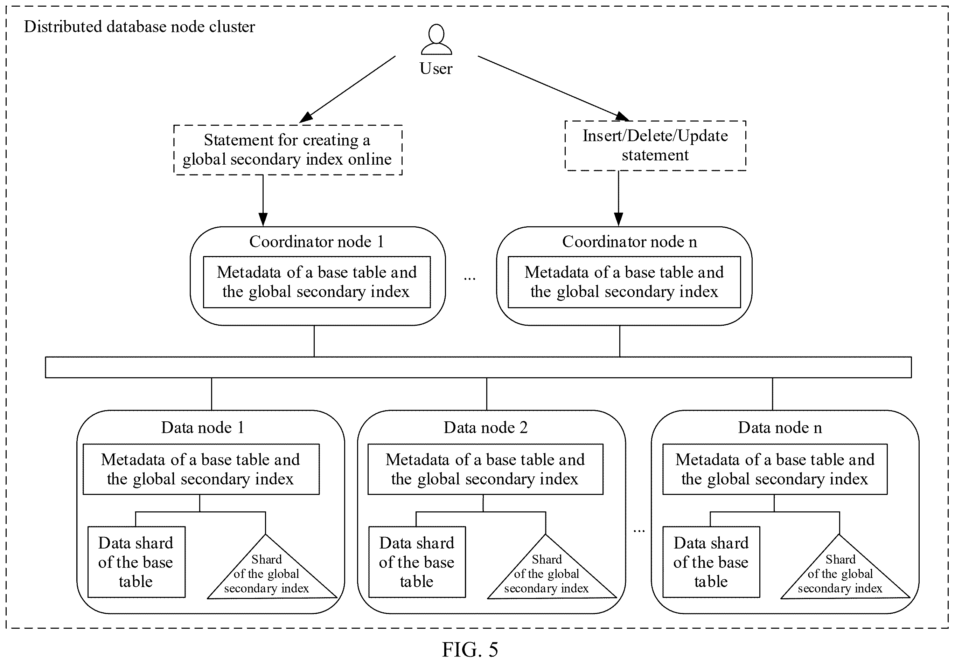

FIG. 5 shows an architecture of a distributed system according to an embodiment of this application. The distributed system may include a user client, N coordinator nodes (coordinating nodes, CNs) or (coordinators), and M data nodes (data nodes, DNs), where N and M are positive integers. The client and the coordinator node may communicate with each other, and the coordinator node and each data node may communicate with each other.

The client may be configured to receive an instruction input by a user, and send the instruction to the coordinator node. For example, the instruction input by the user on the client may include a storage instruction, a modification instruction, an insert/update/delete (insert/update/delete, IUD) instruction, and the like. In this embodiment of this application, the distributed system may include at least one client, and the instruction input by the user on the client may be a global secondary index GSI creation instruction. The client may receive the GSI creation instruction input by the user and send the GSI creation instruction to the coordinator node.

In this embodiment of this application, when the user sends the GSI creation instruction on one client, there is one coordinator node (for example, a coordinator node 1) in the distributed system that can receive the GSI creation instruction. The coordinator node that receives the GSI creation instruction can be responsible for an entire procedure of creating the GSI online, and execute the method for creating the index provided in embodiments of this application.

In this embodiment of this application, during online creation of the GSI in the distributed system, an IUD operation instruction input by the user on the client can also be synchronously processed by the distributed system. For example, in the distributed system, when sending, on the client, an instruction for creating a global secondary index GSI on a base table, the user may also send an instruction for performing deleting, modification, or update on the base table. The two instructions are processed concurrently by the distributed system. To be specific, during online creation of the GSI, if an insert/update/delete operation is performed on the data in the base table, the global secondary index GSI of the base table is updated synchronously. This ensures consistency between the data in the base table and data of the GSI after online creation of the GSI is completed.

It may be understood that when the user sends an IUD operation instruction on one client, there is also one coordinator node (for example, a coordinator node 2) in the distributed system that can receive the IUD operation instruction. The coordinator node that receives the IUD operation instruction may be responsible for an entire execution procedure of an IUD operation, and perform the IUD operation on data in a base table. Optionally, the coordinator node 1 and the coordinator node 2 may be the same or may be different. The coordinator node may be configured to receive a user request from the client, parse the user request, and perform a corresponding operation, or send indication information to the data node, so that the data node can perform a corresponding operation based on the indication information. Optionally, the coordinator node may further receive data obtained by the data node based on the indication information, and return the data to the client. In this embodiment of this application, when the user request is to create a GSI, the coordinator node may deliver a creation command to another node based on the request. The another node may include all data nodes in the distributed system, or may include another coordinator node in the distributed system.

In an example, when the user request is to store data, the coordinator node may store the data on the data node based on the request. The data may include a plurality of groups of base table data, and a base table is a base table (also referred to as a data table) in a database. For any group of base table data, the base table data may include a distribution key. The coordinator node may store, based on the distribution key corresponding to the base table data, the base table data on a data node corresponding to the distribution key.

In addition, an index may be further created for a column in the base table data. That is, each group of base table data may further correspond to a group of index data. For any group of index data, the index data may also correspond to a distribution key of the index data. The coordinator node may store, based on the distribution key corresponding to the index data, the index data on a data node corresponding to the distribution key.

In this embodiment of this application, an index distributed on a different data node from the base table may be referred to as a global secondary index GSI. Correspondingly, the index data may also be referred to as global secondary index GSI data. For any group of GSI data, the GSI data may also correspond to a distribution key of the GSI data. The coordinator node may store, based on the distribution key corresponding to the GSI data, the GSI data on a data node corresponding to the distribution key.

For example, the distributed system may include three data nodes: a data node 1, a data node 2, and a data node 3. The data node 1 may store base table data 1 and GSI data 1, the data node 2 may store base table data 2 and GSI data 2, and the data node 3 may store base table data 3 and GSI data 3.

Each group of base table data and GSI data that corresponds to the base table data may be distributed on a same data node, or may be distributed on different data nodes. A quantity of data nodes and a data storage manner in this application are not limited in this application. In actual application, base table data stored on any data node may be a group of, a plurality of groups of, or zero groups of base table data, and GSI data stored on any data node may also be a group of, a plurality of groups of, or zero groups of GSI data.

Distribution of the base table data and the GSI data on the data node is not required. Available distribution manners include a hash (hash) distribution manner, a range (range) distribution manner, a list (list) distribution manner, and the like. For example, for data distributed based on a hash, a data node corresponding to the data may be determined and calculated based on a hash value of the data. For data distributed based on a range, a data node corresponding to the data may be directly determined based on a range of the data. For data distributed based on a list, a data node corresponding to the data may be directly determined based on a list mapping value of the data.

Optionally, for any group of base table data, the base table data may further correspond to a partition key. The coordinator node determines a data node corresponding to the base table data, and then store, based on the partition key corresponding to the base table data, the base table data in a storage unit corresponding to the partition key. Similarly, a plurality of partitioning manners of the base table data may be included, for example, a hash manner, a range manner, and a list manner.

For example, for data partitioned based on a hash, a storage unit corresponding to the data may be determined and calculated based on a hash value of the data. For base table data distributed based on a range, a storage unit corresponding to the data may be directly determined based on a range of the data. For base table data distributed based on a list, a storage unit corresponding to the data may be directly determined based on a list mapping value of the data.

The coordinator node may further send a mapping relationship of the base table data to each data node. The mapping relationship indicates a distribution logic between the base table data and the data node.

For example, for base table data distributed based on a hash, the mapping relationship of the base table data may include a mapping relationship between each hash value and a data node that corresponds to each hash value. For base table data distributed based on a range, the mapping relationship of the base table data may include a mapping relationship between each range and a data node that corresponds to each range. For base table data distributed based on a list, the mapping relationship of the base table data may include a mapping relationship between each list mapping value and a data node that corresponds to each list mapping value.

In this embodiment of this application, the distribution manner and the partitioning manner of the base table data are independent of each other, and the distribution manner and the partitioning manner may be used in combination. The following briefly describes the base table data and the GSI data in embodiments of this application.

A base table includes at least one column of data, and the at least one column of data may be divided into at least one row of data, that is, a base table includes at least one row×at least one column of data, for example, three rows×five columns. In some embodiments of this application, data in a same column in the base table belongs to a same attribute, and data in a same row in the base table belongs to a same tuple. A same tuple may be stored in a same storage location. The at least one column of data in the base table may be used as a distribution key of the base table, and the distribution key of the base table is used to determine a storage location of data in the base table. Optionally, the base table may further have at least one column of data used as a primary key. The distribution key and the primary key of the base table may be the same or different. The distribution key and the primary key of the base table may be data in a specified column in the base table, or may be data determined based on a user indication.

In embodiments of this application, the global secondary index GSI of the base table includes data in some columns in the base table and location information corresponding to the data in the base table, the data in some columns may be selected by a user from column data in the base table and is set, and the location information corresponding to the data indicates a location of the corresponding data in the base table. Optionally, the location information includes a node in which the data is located and a storage location in the node in which the data is located. Optionally, the global secondary index of the base table may further include version information (or referred to as transaction information) corresponding to the data in the base table, and the version information corresponding to the data is used to determine whether the corresponding data is valid. In some embodiments of this application, in the global secondary index, data in a same column belongs to a same attribute, and data in a same row belongs to a same tuple. A same tuple may be stored in a same location.

In some embodiments, at least one column of data in the global secondary index GSI may be used as a distribution key of the global secondary index, and the distribution key of the global secondary index GSI is used to determine a storage location of the data in the global secondary index GSI. A distribution manner of the distribution key may be a hash (hash) distribution manner, a list (list) distribution manner, a range (range) distribution manner, or the like.

In some embodiments, the global secondary index GSI may include an index key, an additional key (which may also be referred to as an additional column/a hidden column/a covered column/an included column), and the like. The index key is at least one column of data in the global secondary index GSI, and may be used to query specific data, to increase a query speed. The hidden column includes at least one column of data that is in the global secondary index GSI and that is invisible to the user, and when the user indicates to display the global secondary index GSI, data in the global secondary index GSI displayed to the user does not include data in the hidden column of the global secondary index GSI. The distribution key and the index key of the global secondary index may be the same or different. The distribution key and the index key of the global secondary index may be data in a specified column, or may be data determined based on a user indication.

In this embodiment of this application, the coordinator node and the data node may store metadata of the base table and the global secondary index. The metadata shows a status of the base table or global secondary index on a current node. Optionally, the metadata includes but is not limited to description information of a database object, for example, a type, an attribute, a name, and a metadata version.

In some embodiments, an instruction input by the user on the client may alternatively be a query instruction. After receiving the query instruction input by the user, the client may send the query instruction to the coordinator node, so that the coordinator node can send indication information to the data node based on the query instruction. The indication information may include a query condition and a query manner. The data node may be configured to store data, receive the indication information from the coordinator node, and perform a corresponding operation based on the query condition in the indication information. The query manner may be understood as whether to use the GSI to query data.

In this embodiment of this application, the data node may perform query from stored base table data based on the query condition, or may perform query from stored GSI data based on the query condition. When the query condition is a query condition that is based on the distribution key of the base table, the data node may quickly find expected data from the stored base table data. When the query condition is a query condition of another column that is based on a non-distribution key of the base table, if a global secondary index GSI that is based on the another column of the base table is created in the distributed system, the data node may also quickly find expected data from the stored GSI data. In this embodiment of this application, the coordinator node may be a server having a control function. The coordinator node and the data node may be independent servers, or may be different virtual machines that belong to a same server or a plurality of servers. Optionally, the coordinator node may alternatively be a controller, or a chip used in the controller.

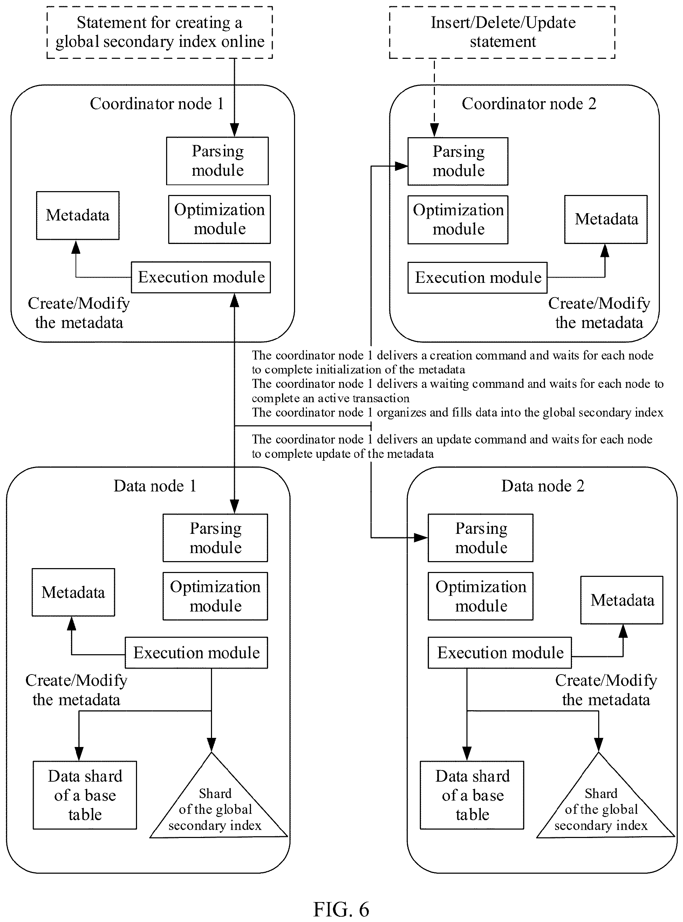

FIG. 6 shows a method for creating an index in the foregoing distributed system according to this embodiment of this application. Each node in the distributed system may include a parsing module, an optimization module, and an execution module. A user may input, on a client, a statement for creating a global secondary index GSI on a coordinator node, to trigger a global secondary index GSI creation procedure. After the user inputs the statement for creating the GSI, the parsing module and the optimization module in the coordinator node parse and optimize the statement for creating the GSI respectively, and convert the statement for creating the GSI into a data structure, for example, an execution plan, that can be identified by the execution module. The execution module is configured to implement plan execution, for example, send a creation command to another node.

In the distributed system, the user can log in to the client to connect to the distributed system. As shown in FIG. 6, after the user inputs, on the client, the statement for creating the global secondary index GSI online, a coordinator node 1 in the distributed system receives the statement for creating the global secondary index GSI online. In this case, the coordinator node can be used as a node for creating the GSI index, and is responsible for an entire procedure of creating the GSI online. When the statement for creating the GSI online is processed by the parsing module and the optimization module, and entered to the execution module, the coordinator node can deliver a creation command to the another node to instruct the another node to create and initialize metadata of the GSI, and wait for all nodes (including the coordinator node) to complete creation and initialization of the metadata of the GSI.

The another node may be another coordinator node and data node. As shown in FIG. 6, the coordinator node 1 may deliver the creation command to a coordinator node 2, a data node 1, and a data node 2, and wait for the coordinator node 2, the data node 1, and the data node 2 to complete creation and initialization of the metadata of the GSI.

After executing creation and initialization of the metadata of the GSI using respective parsing module, optimization module, and execution module, each node gives feedback to the coordinator node 1. After receiving the feedback from all the other nodes, the coordinator node 1 delivers a command for waiting for completion of a currently active transaction and waits for all the nodes (including the coordinator node 1) to complete waiting for completion of the currently active transaction. After executing, using respective parsing module, optimization module, and execution module, waiting for completion of the currently active transaction, each node gives feedback to the coordinator node 1. After receiving the feedback from all the other nodes, the coordinator node 1 starts to organize base table data to fill the global secondary index GSI.

In this embodiment of this application, the coordinator node 1 may send a structured query language (structured query language, SQL) statement to fill the data into the global secondary index. The parsing module and the optimization module may parse and optimize an indication of the SQL statement, and then send a parsed and optimized indication to the execution module. The execution module may query the data node based on the indication to obtain the data required for creating the global secondary index, and then stores, in the data node, the obtained data as data of the global secondary index, to create the global secondary index. After filling ends, the coordinator node 1 starts to notify and wait for all nodes (including the coordinator node 1) to update a metadata version, to complete creation of the global secondary index.

For example, a function of the parsing module may be implemented by a parser deployed in the coordinator node, a function of the optimization module may be implemented by an optimizer deployed in the coordinator node, and a function of the execution module may be implemented by an executor deployed in the data node. Certainly, the functions of the foregoing modules may alternatively be implemented by using another hardware apparatus. This is not specifically limited in embodiments of this application.

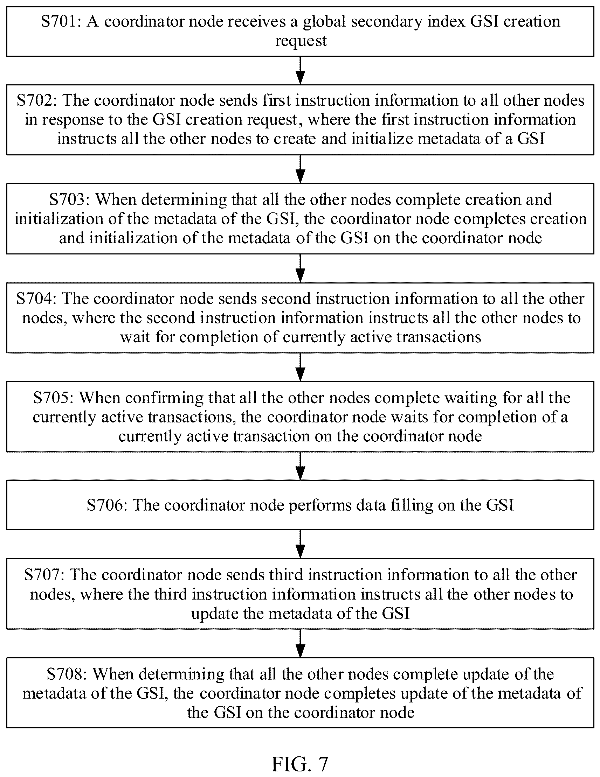

FIG. 7 is a flowchart of a method for creating an index in a distributed system according to an embodiment of this application. The method may be implemented by a coordinator node in the distributed system, for example, may be implemented by a processor in the coordinator node or a logical function module in the coordinator node. The method includes the following steps.

S701: The coordinator node receives a global secondary index GSI creation request.

In this embodiment of this application, a user may log in to a client, connect to the distributed system, and input a statement for creating a GSI. The distributed system includes a node cluster including a plurality of nodes, and the node cluster may include at least one coordinator node and at least one data node. The coordinator node is mainly responsible for instructing a related node to perform data processing and calculation. The data node is mainly responsible for storing data and calculation.

After the user inputs the statement for creating the GSI, a coordinator node in the distributed system can receive the statement for creating the GSI, and the coordinator node that receives the statement for creating the GSI is responsible for the entire creation procedure of the GSI. It may be understood that when receiving the statement, for creating the GSI, input by the user, the coordinator node may determine that the GSI creation request is received.

Optionally, the statement, for creating the GSI, input by the user may indicate a target data table to which the GSI is applicable. The target data table may be any base table or several base tables in the distributed system. In this way, the distributed system can determine a data table based on which the GSI needs to be created.

In this embodiment of this application, the user may also input a deleting, modification, or update (IUD) statement, and the distributed system also has a coordinator node that can receive the IUD statement. The coordinator node that receives the IUD statement is responsible for performing an IUD operation on the data table.

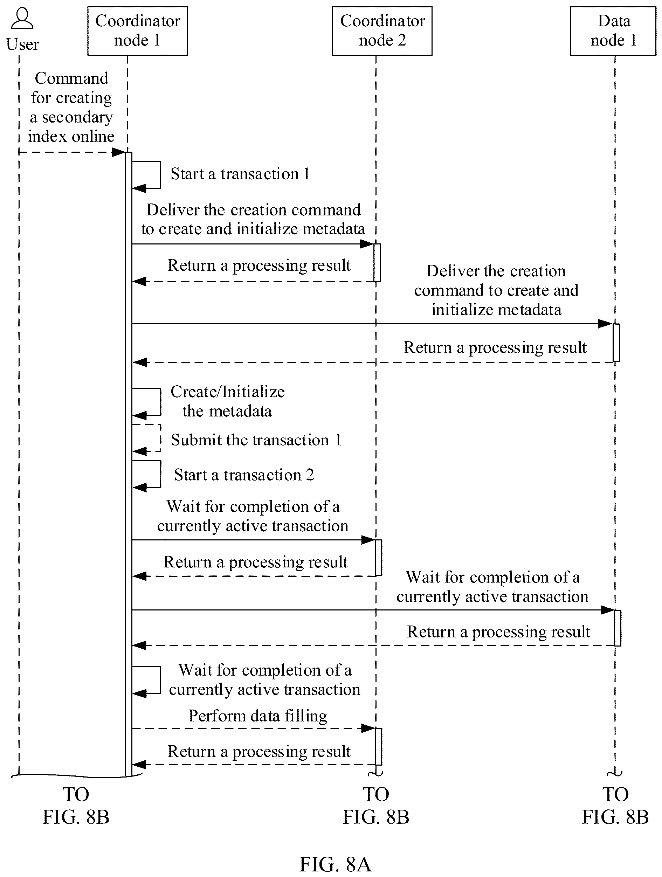

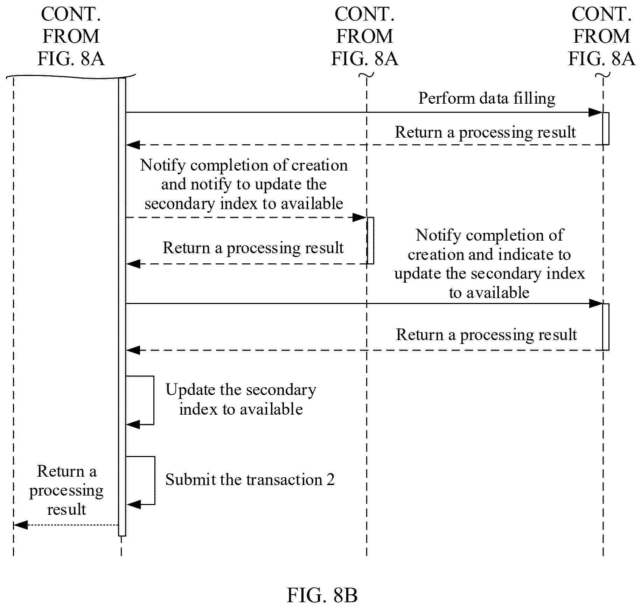

For ease of differentiation, the coordinator node that receives the statement, for creating the GSI, input by the user may be defined as a coordinator node 1, and the coordinator node that receives the IUD statement input by the user may be defined as a coordinator node 2. As shown in FIG. 8A and FIG. 8B, the statement, for creating the GSI, input by the user is sent to the coordinator node 1, so that the coordinator node 1 can perform the method for creating the index in the distributed system provided in this application.

S702: The coordinator node sends first instruction information to all other nodes in response to the GSI creation request, where the first instruction information instructs all the other nodes to create and initialize metadata of the GSI.

In this embodiment of this application, when the coordinator node is responsible for creating the GSI, the coordinator node may deliver the first instruction information to all the other nodes. The all other nodes include another coordinator node and all data nodes. The first instruction information instructs each of the all other nodes to create and initialize the GSI-related metadata.

Optionally, the coordinator node may start a transaction 1, to submit the transaction 1 after notifying and waiting for all the nodes to complete initialization and setting of the metadata of the GSI. A transaction is a completed service logic. The transaction 1 herein may be understood as service logic in which the coordinator node needs to wait for all the nodes to complete initialization of the metadata of the GSI.

As shown in FIG. 8A and FIG. 8B, after the coordinator node 1 starts the transaction 1, the coordinator node 1 separately delivers a creation command to a coordinator node 2 and a data node 1, to indicate the coordinator node 2 and the data node 1 each to complete creation and initialization of the metadata of the GSI. The data node 1 may be any data node in the distributed system. The coordinator node 2 may be any coordinator node in the distributed system other than the coordinator node 1.

Optionally, each of all the other nodes may create and initialize the GSI-related metadata when receiving the first instruction information. After completing creation and initialization of the GSI-related metadata, each node may set a metadata version of the GSI to write only (write only).

In a manner, each of all the other nodes may feed back first feedback information to the coordinator node after completing creation, initialization, and version setting of the metadata of the GSI. The first feedback information indicates completion of creation and initialization of the GSI-related metadata. As shown in FIG. 8A and FIG. 8B, after completing creation and initialization of the GSI-related metadata, the coordinator node 2 and the data node 1 each return, to the coordinator node 1, a processing result indicating completion of initialization.

In another manner, preset processing duration may be set for each of all the other nodes, and each node needs to complete creation, initialization, and version setting of the metadata of the GSI within the preset processing duration. If a node does not complete creation, initialization, and version setting of the metadata of the GSI within the preset processing duration, online creation of the GSI is stopped, and the coordinator node restarts a procedure of creating a GSI online, that is, responds to a GSI creation request again, and sends first instruction information to all the other nodes.

Optionally, if a node does not complete creation, initialization, and version setting within the preset processing duration, the node may feed back one piece of indication information to the coordinator node, where the indication information indicates failure of creation, initialization, and version setting of the metadata of the GSI on the node. In this way, the coordinator node can terminate the current procedure of creating the GSI online and restart a procedure of creating a GSI online. It may be understood that a feedback manner of each of all the other nodes after creation, initialization, and version setting of the metadata of the GSI are performed is not limited in embodiments of this application, and a manner other than the foregoing manner may be used, or no feedback operation may be performed.

S703: When determining that all the other nodes complete creation and initialization of the metadata of the GSI, the coordinator node completes creation and initialization of the metadata of the GSI on the coordinator node.

In this embodiment of this application, after confirming that all the other nodes have completed creation and initialization of the metadata of the GSI, the coordinator node starts to create and initialize the metadata of the GSI on the coordinator node. After completing creation and initialization of the GSI-related metadata, the coordinator node sets a metadata version of the GSI to write only (write only). In this case, the metadata version of the GSI is globally unified. This implements data consistency in a metadata non-asynchronous (synchronous) update mechanism, and ensures high availability during online creation of the GSI.

Optionally, the coordinator node may confirm, when receiving the first feedback information sent by all the other nodes, that all the other nodes have completed creation and initialization of the metadata of the GSI.

Optionally, the coordinator node may also automatically confirm, after waiting for the preset processing duration, that all the other nodes have completed creation and initialization of the metadata of the GSI. Optionally, if the coordinator node receives, during a waiting period of the preset processing duration, initialization failure indication information fed back by a node, the coordinator node may confirm that not all the nodes have completed creation and initialization of the metadata of the GSI. In this case, the coordinator node may terminate the current procedure of creating the GSI online, and restart a procedure of creating the GSI online, that is, respond to a GSI creation request again, and send first instruction information to all the other nodes.

A manner in which the coordinator node determines that all the other nodes complete creation and initialization of the metadata of the GSI is not limited in embodiments of this application, and the manner may be a manner other than the foregoing confirmation manner.

It may be understood that different from metadata asynchronous update in a related technology in which a specific node first completes creation and initialization of metadata of a GSI, and then notifies, by using a third-party node/tool, another node to complete creation and initialization of the metadata of the GSI, this solution in which the coordinator node first notifies and waits for all the other nodes to complete creation and initialization of the metadata of the GSI, and then synchronously completes creation and initialization of the metadata of the GSI on coordinator node implements a metadata asynchronous update mechanism during online creation of the GSI. In addition, the node that executes online creation of the GSI in this solution is not a specific node, but any coordinator node in the cluster can execute online creation of the GSI once receiving the creation request. This can avoid frequent increase of additional burdens on a node due to the node being fixed for executing online creation of the GSI, without introducing a third-party node/tool with high concurrent access load for coordinating metadata update. This can effectively ensure high concurrent performance in the large-scale cluster.

It may be understood that when the coordinator node completes creation, initialization, and version setting of the metadata of the GSI on the coordinator node, it may be considered that initialization of the metadata of the GSI on all nodes is completed, and the transaction 1 is implemented. In this case, the coordinator node may submit the transaction 1 to end the transaction.

S704: The coordinator node sends second instruction information to all the other nodes, where the second instruction information instructs all the other nodes to wait for completion of currently active transactions.

In this embodiment of this application, when initialization of the metadata of the GSI on all the nodes is completed, the coordinator node may continue to deliver the second instruction information to all the other nodes. The second instruction information instructs each of all the other nodes to wait for end of all currently active DML transactions on a target data table. The active transaction in this solution refers only to a transaction that has not ended or submitted.

Optionally, the coordinator node may start a transaction 2, and notify and wait for all the nodes to complete all the currently active transactions. As shown in FIG. 8A and FIG. 8B, after the coordinator node 1 starts the transaction 2, the coordinator node 1 separately delivers a waiting command to the coordinator node 2 and the data node 1, to indicate the coordinator node 2 and the data node 1 each to wait for completion of all the currently active transactions.

Optionally, when receiving the second instruction information, each of all the other nodes may execute the command, and wait for end of all the currently active DML transactions on the target data table. In a manner, each of all the other nodes may feed back second feedback information to the coordinator node after completing waiting for all the currently active transactions. The second feedback information indicates that all the currently active DML transactions on the target data table have ended. As shown in FIG. 8A and FIG. 8B, after waiting for end of all the currently active DML transactions on the target data table, the coordinator node 2 and the data node 1 each return, to the coordinator node 1, a processing result indicating that all the currently active transactions have ended.

In another manner, preset processing duration may be set for each of all the other nodes, and each node needs to complete, within the preset processing duration, waiting for all the currently active transactions. If a node does not complete, within the preset processing duration, waiting for all the currently active transactions, online creation of the GSI is stopped, and the coordinator node restarts a procedure of creating a GSI online, that is, responds to a GSI creation request again, and sends first instruction information to all the other nodes. Optionally, the preset processing duration herein may be the same as or different from the preset processing duration set in a phase of initialization of the metadata of the GSI.

Optionally, if a node does not complete, within the preset processing duration, waiting for all the currently active transactions, the node may feed back one piece of indication information to the coordinator node, where the indication information indicates failure of waiting for all the currently active transactions on the node. In this way, the coordinator node can terminate the current procedure of creating the GSI online and restart a procedure of creating a GSI online.

It may be understood that a feedback manner of each of all the other nodes after waiting for all the currently active transactions is performed is not limited in embodiments of this application, and a manner other than the foregoing manner may be used, or no feedback operation may be performed.

S705: When confirming that all the other nodes complete waiting for all the currently active transactions, the coordinator node waits for completion of a currently active transaction on the coordinator node.

In this embodiment of this application, after confirming end of all the currently active transactions on all the other nodes, the coordinator node starts to wait for end of all the currently active DML transactions on the target data table on the coordinator node.

Optionally, the coordinator node may confirm, when receiving the second feedback information sent by all the other nodes, that all the other nodes have completed creation and initialization of the metadata of the GSI.

Optionally, the coordinator node may also automatically confirm, after waiting for the preset processing duration, that all the other nodes have completed waiting for all the currently active transactions. Optionally, if the coordinator node receives, during a waiting period of the preset processing duration, waiting failure indication information fed back by a node, the coordinator node may confirm that not all the nodes have completed waiting for all the currently active transactions. In this case, the coordinator node may terminate the current procedure of creating the GSI online, and restart a procedure of creating the GSI online, that is, respond to a GSI creation request again, and send first instruction information to all the other nodes.

A manner in which the coordinator node determines that all the other nodes complete waiting for all the currently active transactions is not limited in embodiments of this application, and the manner may be a manner other than the foregoing confirmation manner.

S706: The coordinator node performs data filling on the GSI.

It may be understood that when the coordinator node completes all the currently active DML transactions on the target data on the coordinator node, it may be considered that all the nodes complete all the currently active DML transactions on the target data. In this way, the coordinator node may continue to execute the procedure of creating the GSI online. In this case, the coordinator node may obtain data visible to the current transaction, for example, in a snapshot manner, and then obtain required data from data in the target data table under the snapshot, and fill the required data into the GSI. In this way, during online creation of the GSI by the coordinator node, after confirming that all the nodes (including the coordinator node) complete the currently active transaction, the coordinator node starts to fill the data into the GSI, without hindering normal execution of the user DML transaction, thereby ensuring high availability during online creation of the GSI.

Optionally, the coordinator node may obtain required related data from each data node in which the target data table is located, and then send the required related data to a corresponding destination data node based on a distribution key, to fill the data into a data shard of the destination data node corresponding to the GSI, to form a GSI shard in the data node 1 shown in FIG. 6.

In an example, when the data in the target data table and data in the GSI are distributed and stored on a plurality of different nodes according to a hash (hash) distribution rule, the coordinator node calculates address information between nodes of the data based on a distribution key value of the obtained target data table by using a hash algorithm, and then inserts the obtained data and the address information obtained through calculation into the GSI of the data node. In this way, data filling on the GSI is implemented.

Optionally, when confirming that data filling of a related node (for example, the destination data node corresponding to the GSI) is completed, the coordinator node confirms that data in the target data table under the snapshot has been scanned, and the data filling of the GSI ends.

In a manner, after completing data filling, the destination data node may feed back, to the coordinator node, information indicating that data filling is completed, so that when receiving the feedback information from the destination data node, the coordinator node can confirm that data filling of the destination data node is completed. Optionally, when the destination data node corresponding to the GSI includes the coordinator node 2 and the data node 1, as shown in FIG. 8A and FIG. 8B, the coordinator node 1 may perform data filling on the GSI on the coordinator node 2 and the data node 1. After completing data filling, the coordinator node 2 and the data node 1 each return, to the coordinator node 1, a processing result indicating that data filling ends.

A feedback manner after the destination data node completes data filling is not limited in embodiments of this application, and the feedback manner may be another manner, for example, no feedback, or feedback is provided only when data filling fails.

A manner in which the coordinator node determines that the destination data node completes data filling is not limited in embodiments of this application, and the manner may be another manner, for example, automatically confirming, after waiting for preset processing duration, that the destination data node completes data filling.

S707: The coordinator node sends third instruction information to all the other nodes, where the third instruction information instructs all the other nodes to update the metadata of the GSI.

In this embodiment of this application, when data filling of the GSI is completed, the coordinator node may deliver the third instruction information to all the other nodes. The third instruction information instructs each of all the other nodes to update the metadata of the GSI to an available (public) state.

As shown in FIG. 8A and FIG. 8B, the coordinator node 1 delivers a creation completion notification (the third instruction information) to the coordinator node 2 and the data node 1 separately, to instruct the coordinator node 2 and the data node 1 to update the metadata version. The creation completion notification delivered by the coordinator node 1 may include a metadata version modification command.

When receiving the third instruction information, each of all the other nodes may set the metadata version of the GSI to available (public). In a manner, each of all the other nodes may feed back third feedback information to the coordinator node after completing setting to the version available (public). The third feedback information indicates completion of update of the metadata version of the GSI. As shown in FIG. 8A and FIG. 8B, after completing update of the metadata version of the GSI, the coordinator node 2 and the data node 1 each return, to the coordinator node 1, a processing result indicating completion of update of the metadata version of the GSI.

In another manner, preset processing duration may be set for each of all the other nodes, and each node needs to complete setting to the version available (public) of the metadata of the GSI within the preset processing duration. If a node does not complete setting to the version available (public) of the metadata of the GSI within the preset processing duration, online creation of the GSI is stopped, and the coordinator node restarts a procedure of creating a GSI online, that is, responds to a GSI creation request again, and sends first instruction information to all the other nodes. Optionally, the preset processing duration herein may be the same as or different from the foregoing set preset processing duration.

Optionally, if a node does not complete setting to the version available (public) of the metadata of the GSI within the preset processing duration, the node may feed back one piece of indication information to the coordinator node, where the indication information indicates failure of setting to the version available (public) of the metadata of the GSI on the node. In this way, the coordinator node can terminate the current procedure of creating the GSI online and restart a procedure of creating a GSI online.

It may be understood that a feedback manner of each of all the other nodes after setting to the version available (public) of the metadata of the GSI is performed is not limited in embodiments of this application, and a manner other than the foregoing manner may be used, or no feedback operation may be performed.

S708: When determining that all the other nodes complete update of the metadata of the GSI, the coordinator node completes update of the metadata of the GSI on the coordinator node.

In this embodiment of this application, after confirming completion of update to the version available (public) of the metadata of the GSI on all the other nodes, the coordinator node starts to complete update of the metadata version of the GSI on the coordinator node, that is, sets the metadata version of the GSI on the coordinator node to available (public). In this case, the metadata version of the GSI is globally unified. This implements data consistency in the metadata non-asynchronous (synchronous) update mechanism, and ensures high availability during online creation of the GSI.

Optionally, the coordinator node may confirm, when receiving the third feedback information sent by all the other nodes, that all the other nodes have completed update to the version available (public) of the metadata of the GSI.

Optionally, the coordinator node may also automatically confirm, after waiting for the preset processing duration, that all the other nodes have completed update to the version available (public) of the metadata of the GSI. Optionally, if the coordinator node receives, during a waiting period of the preset processing duration, version update failure indication information fed back by a node, the coordinator node may confirm that not all the nodes have completed update to the version available (public) of the metadata of the GSI. In this case, the coordinator node may terminate the current procedure of creating the GSI online, and restart a procedure of creating the GSI online, that is, respond to a GSI creation request again, and send first instruction information to all the other nodes.

A manner in which the coordinator node determines that all the other nodes complete update to the version available (public) of the metadata of the GSI is not limited in embodiments of this application, and the manner may be a manner other than the foregoing confirmation manner.

It may be understood that when the coordinator node completes update of the metadata version of the GSI on the coordinator node, it may be considered that update of the metadata version of the GSI on all the nodes is completed. In this case, the coordinator node may submit the transaction 2 to end the transaction. In this way, online creation of the GSI is completed.

In this embodiment of this application, after completing online creation of the GSI, the coordinator node may return a creation result to the client of the user, so that the user can complete quick query of another column of a non-distribution key based on the secondary index.

It may be understood that this application can ensure data consistency by using the metadata non-asynchronous (synchronous) update mechanism. Therefore, transition of the metadata version can be simplified. In other words, a metadata version delete only does not need to be added.

In some embodiments, to reduce changes to a related technology, the original metadata version delete only may be retained, and a step of updating the metadata version delete only is repeated. For example, the coordinator node may send fourth instruction information to all the other nodes, where the fourth instruction information instructs all the other nodes to create and initialize the metadata of the GSI, and set the metadata version of the GSI to the version delete only. When determining that all the other nodes complete setting to the version delete only of the metadata of the GSI, the coordinator node completes creation and initialization of the metadata of the GSI and setting to the version delete only of the metadata on the coordinator node. After confirming that all the nodes (including the coordinator node) complete setting to the version delete only of the metadata of the GSI, the coordinator node performs subsequent procedures such as update to a version write only (write only), waiting for the currently active transaction, data filling, and update to the version available (public).

In an example, the coordinator node may send fifth instruction information to all the other nodes when determining that the coordinator node and all the other nodes complete setting to the version delete only of the global secondary index, where the fifth instruction information instructs all the other nodes to update the metadata of the GSI and update the metadata version of the GSI to the version write only. When determining that all the other nodes complete update to the version write only of the metadata of the GSI, the coordinator node completes update of the metadata of the GSI and update to the version write only of the metadata on the coordinator node. After confirming completion of update to the version write only of the metadata on all the nodes (including the coordinator node), the coordinator node sends the second instruction information to all the other nodes, where the second instruction information instructs all the other nodes to wait for completion of the currently active transaction. When confirming that all the other nodes complete waiting for all the currently active transactions, the coordinator node waits for, on the coordinator node, completion of the currently active transaction of the coordinator node. After confirming completion of the currently active transactions on all the nodes (including the coordinator node), the coordinator node performs data filling on the GSI. After confirming completion of data filling, the coordinator node sends the third instruction information to all the other nodes, where the third instruction information instructs all the other nodes to update the metadata of the GSI and update the metadata version of the GSI to the version public. After determining that all the other nodes complete update to the version public of the metadata, the coordinator node updates the metadata of the GSI on the coordinator node, and updates the metadata version of the GSI to the version public.

Optionally, this solution may also follow a user DML transaction priority principle. To be specific, the coordinator node first notifies and waits for the other nodes to update to the version delete only, and then completes update to the version delete only on the coordinator node. Then, the coordinator node needs to obtain a metadata lock and wait for completion of the transaction (end of a transaction whose metadata version≤the version delete only). Then, the coordinator node can enter notification and waiting of the next version write only, and synchronously update to write only on the coordinator node. During online creation of the GSI, this do not hinder normal execution of the user DML transaction, and ensure high availability during creation.

In an example, the coordinator node may send sixth instruction information to all the other nodes when determining that the coordinator node and all the other nodes complete setting to the version delete only of the global secondary index, where the sixth instruction information instructs all the other nodes to wait for completion of the currently active transaction. When confirming that all the other nodes complete waiting for all the currently active transactions, the coordinator node waits for completion of the currently active transaction on the coordinator node. After confirming completion of currently active transactions on all the nodes (including the coordinator node), the coordinator node sends the fifth instruction information to all the other nodes, where the fifth instruction information instructs all the other nodes to update the metadata of the GSI and update the metadata version of the GSI to the version write only. When determining that all the other nodes complete update to the version write only of the metadata of the GSI, the coordinator node completes, on the coordinator node, update of the metadata of the GSI and update to the version write only of the metadata of the coordinator node.

The following describes in detail the method for creating the index provided in this application by using an instance.

In an example, the method for creating the index provided in this application may be applied to a student status system based on a distributed system architecture. For example, the student status system has a data table. The data table is named A, and attribute columns include a studentid student ID (distribution key), a name student name, and a classid class ID. Table 1 shows data in the entire data table A.

**Table 1**

| studentid | name | classid |
|---|---|---|
| 1 | Xiao Ming | 11 |
| 2 | Xiao Wang | 12 |
| 3 | Xiao Zhang | 13 |
| 4 | Xiao Li | 9 |
| 5 | Xiao Yang | 8 |
| 6 | Xiao Hong | 7 |
| ... | ... | ... |

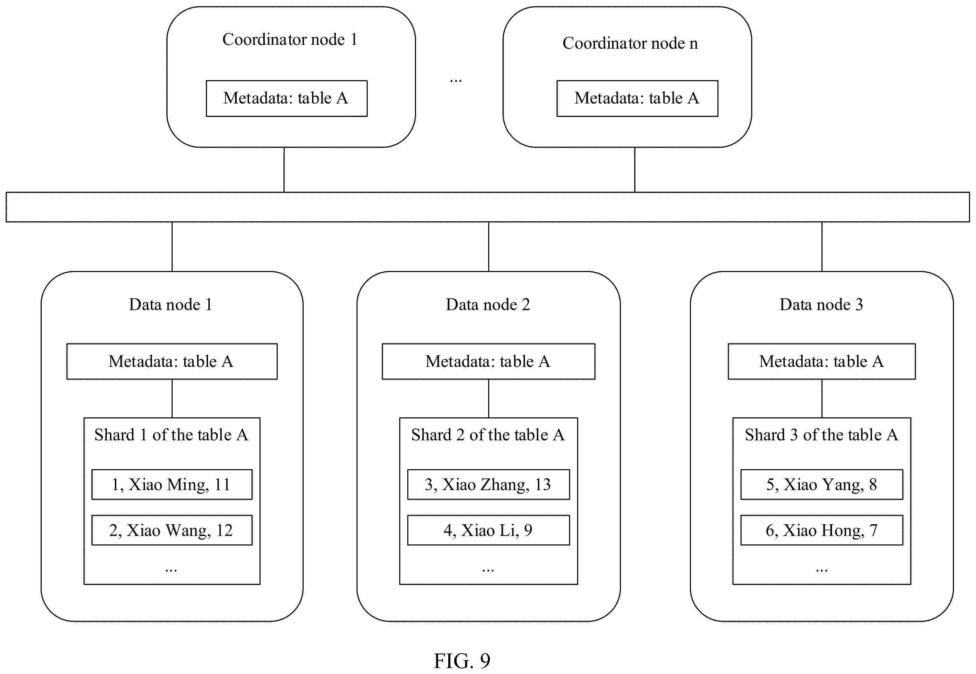

The studentid is an auto-increment and unique attribute. Therefore, the data table A uses hash hash distribution, and the data is evenly distributed to each node in the distributed system based on a hash algorithm and the column studentid. For example, data distribution of the data table A in the distributed system may be shown in FIG. 9. The data table A is sharded into a shard 1 (including data of studentid [1, 2, ...]) of the table A, a shard 2 (including data of studentid [3, 4, ...]) of the table A, and a shard 3 (including data of studentid [5, 6, ...]) of the table A. The shard 1 of the table A is stored in a data node 1, the shard 2 of the table A is stored in a data node 2, and the shard 3 of the table A is stored in a data node 3.

When a user inputs a request for creating a global secondary index on the data table A, a coordinator node (a server or a virtual machine on the server) in the student status system may receive the request and be responsible for creating the global secondary index on the data table A.

The following describes the solution by using an example in which the user creates the global secondary index a on the data table A, where attributes of the global secondary index a are the classid class ID (an index key and a distribution key) and the name student name (an additional key).

A statement for creating the global secondary index a may be "CREATE GLOBAL INDEX CONCURRENTLY a on A (classid) CONTAINING (name) DISTRIBUTE BY HASH (classid)", where CREATE GLOBAL INDEX indicates to create the global secondary index, CONTAINING indicates the additional key, and DISTRIBUTE BY HASH indicates to distribute in a hash distribution manner. A meaning of the statement is to create, on the base table A whose distribution key is the class ID, the global secondary index a whose index key and distribution key are the class ID, distribution manner is hash distribution, and additional key is the student name.

First, the request, for creating the global secondary index, input by the user is sent to the coordinator node in the student status system. The coordinator node can be used as a coordinator node 1 responsible for creating the global secondary index a.

Then, the coordinator node 1 starts a transaction 1, notifies and waits for all nodes to complete initialization of the global secondary index a, and then submits the transaction 1. In this step, the coordinator node 1 delivers a creation instruction to all other coordinator nodes and data nodes. Each other coordinator node and data node initializes metadata of the global secondary index a, sets a metadata version to write only (write only), and then gives feedback to the coordinator node 1 for processing completion. Setting to write only (write only) may be setting a status flag bit (indisvalid) corresponding to the global secondary index a on a system catalog to FALSE. During entire creation and initialization of the global secondary index a, a share lock (SHARE LOCK) can be added to the data table A. The SHARE LOCK lock may also be referred to as a read lock, and is used to block other operations except a query operation, for example, an IUD operation, to ensure that the data in the data table A remains unchanged.

After the coordinator node 1 confirms that the feedback indicating completion of the foregoing operation on all the other nodes is received, the coordinator node 1 creates and initializes the metadata of the global secondary index a, sets the metadata version to write only (write only), and adds the SHARE LOCK lock to the data table A in this process. The coordinator node submits the transaction 1, and the metadata version of the global secondary index a is unified globally in this case.

Then, the coordinator node 1 starts a transaction 2, and notifies and waits for all the nodes to complete waiting for all currently active transactions. In this step, the coordinator node 1 generates a waiting command and delivers the waiting command to all the other coordinator nodes and data nodes. The waiting command may be an SQL statement: ALTER TABLE {A} GSIWAITALL. The nodes execute the command and wait for end of all the currently active DML transactions on the data table A. Implementation of waiting for all the DML transactions may be implemented by waiting for completion of transactions that conflict with the SHARE LOCK lock on the data table A. The transactions that conflict with the SHARE LOCK lock herein may be understood as the other operations except the query operation blocked above, for example, the IUD operation. After waiting completes, a share update exclusive lock (SHARE UPDATE EXCLUSIVE LOCK) is added to the data table A. This does not block a read operation and a DML operation on the data table A, but blocks another operation, for example, a DDL operation. Then, the coordinator node 1 is fed back that the operation is complete. After the coordinator node 1 confirms that the feedback indicating the operation is complete is received from all the other nodes, the coordinator node 1 waits for end of all the currently active DML transactions on the data table A on the node, and adds the SHARE UPDATE EXCLUSIVE LOCK lock to the data table A. Alternatively, different from the foregoing manner in which each node needs to wait for completion of the active transaction and add a lock, and then feed back to the coordinator node 1, another case is that the coordinator node 1 may also first wait for all the nodes to complete the active transactions, and if confirming that the feedback indicating that the operation is complete is received from all the other nodes, the coordinator node 1 uniformly adds the SHARE UPDATE EXCLUSIVE LOCK lock to each node. In other words, waiting for completion of the active transaction and the lock add operation may be separately performed.

Then, the coordinator node 1 organizes the data of the data table A to fill the global secondary index a. In this step, the coordinator node 1 first adds a row exclusive lock (ROW EXCLUSIVE LOCK) to the global secondary index a. The row exclusive lock is used to block other operations, for example, a DDL operation, but not block an IUD operation on the global secondary index a. Then, the coordinator node 1 obtains a current snapshot, starts to organize, from the data table A under the snapshot, the data (columns corresponding to the distribution key, index key, and additional key) required by the global secondary index a, and fills the data into the global secondary index a.

The data can be filled by using an SQL statement "INSERT INTO a (classid, name, location information, version information) SELECT classid, name, location information, version information FROM A". A meaning of the statement is to select the class ID, the student name, the location information, and the version information from the data table A and insert the class ID, the student name, the location information, and the version information into the global secondary index a. The location information indicates a location of the data in the data table A, and includes information (xc_node_hash) about a node in which the data is located and a storage location (ctid) of the data in the node. A data node into which the data is to be inserted is obtained based on a value of the distribution key classid of the global secondary index a by using a hash algorithm.

When the coordinator node 1 confirms that all the data under the snapshot has been scanned and filled into the global secondary index a, data filling ends.

In this application, during data filling on the data node of the global secondary index a, data modification caused by the IUD operation that occurs synchronously on the data table A needs to be correspondingly reflected in the global secondary index a, to ensure data consistency after creation completes.

For example, during data filling, when a same user or another user inputs an IUD operation request on the data table A, the IUD operation request is also sent to a coordinator node in the student status system. The coordinator node may be used as a coordinator node 2 responsible for performing an IUD operation on the data table A. Optionally, the coordinator node 2 and the coordinator node 1 may be the same or may be different. The coordinator node 2 may deliver a command to a corresponding data node based on the IUD operation request, and the corresponding data node performs IUD processing on data. In this case, a data node may need to simultaneously perform data filling and IUD processing on the global secondary index a.

In a scenario, for example, an IUD operation is an INSERT insert operation. After a row of new data (tuple) is inserted into the data table A through processing of the INSERT operation, the data node of the global secondary index a may obtain data (columns corresponding to a distribution key, index key, and additional key) required by the global secondary index a and insert the data into the global secondary index a.

In an example, the row of data tuple (2, Xiao Wang, 12) is inserted into the data table A. The data tuple insert operation on the data table A may be performed by using an SQL statement "INSERT INTO A (studentid, name, classid) VALUES (2, Xiao Wang, 12) RETURNING studentid, name, classid, location information, and version information". A meaning of the statement is to insert the tuple (2, Xiao Wang, 12) to be inserted and return data content on all columns of the tuple, including the class ID, student name, student ID, location information, and version information. The SQL statement may be calculated by the coordinator node 2 based on the distribution key student ID by using a hash algorithm, and then sent to the corresponding data node for execution.

Then, a tuple insert operation on the global secondary index a may be performed by using an SQL statement "INSERT INTO a (classid, name, location information, version information) VALUES ($3, $2, $4, $5)". A meaning of the statement is to extract the required class ID, student name, location information, and version information from data content on all columns of the returned tuple, form a tuple, and insert the tuple into the global secondary index a. The SQL statement may be calculated based on the distribution key class ID by using a hash algorithm by the coordinator node 2 or the data node that executes the insert operation on the data table A, and then sent to the corresponding data node for execution. After creation of the global secondary index a is completed, the tuple added to the data table A during creation of the global secondary index a also exists in the global secondary index a, and the data is consistent. $X indicates to extract information about data in an X^{th} column from all columns returned by RETURNING. For example, $3 indicates to extract information about the data in a third column (namely, classid) from "studentid, name, classid, location information, and version information" returned by RETURNING.

In another scenario, for example, an IUD operation is a DELETE delete operation. After a row of old data (tuple) is deleted from the data table A through processing of the DELETE operation, the data node of the global secondary index a may delete the corresponding data row from the global secondary index a.

In an example, a tuple (2, Xiao Wang, 12) is deleted from the data table A based on a condition studentid=2. The tuple delete operation on the data table A may be performed by using an SQL statement "DELETE FROM A WHERE studentid=2 RETURNING studentid, name, classid, location information, and version information". A meaning of the statement is to delete the tuple (2, Xiao Wang, 12) based on the deletion condition and return data content on all columns, including the class ID, student name, student ID, location information, and version information. The deletion condition on the data table A includes the distribution key (student ID). Therefore, the SQL statement may be calculated by the coordinator node 2 based on the distribution key student ID by using a hash algorithm, and sent to the corresponding data node for execution.

Then, a data delete operation on the global secondary index a may be performed by using an SQL statement "DELETE FROM a WHERE classid=$3 AND name=$2 AND location information=$4 AND version information=$5". A meaning of the statement is to extract required class ID, student name, location information, and version information from the data content on all returned columns as the deletion condition, and delete a corresponding tuple (12, Xiao Wang, location information, version information) from the global secondary index a. The SQL statement may be calculated based on the distribution key class ID by using a hash algorithm by the coordinator node 2 or the data node that executes the delete operation on the data table A, and sent to the corresponding data node for execution the delete operation.

It should be noted that when the data node of the global secondary index a receives an SQL request and performs processing of deleting the tuple (12, Xiao Wang, location information, version information), the following two cases may occur.

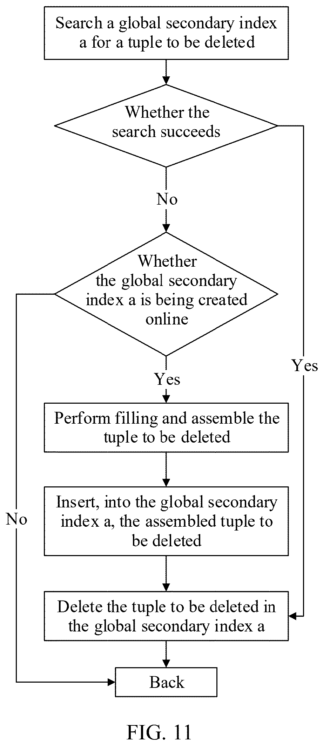

Case 1: The tuple (12, Xiao Wang, location information, version information) has been processed in a data filling procedure for creating the GSI online, and filled into the global secondary index a. When the data node of the global secondary index a performs data row deletion processing, the tuple can be found from the data of the global secondary index a, and is normally deleted. In this way, when the data node of the global secondary index a receives the SQL request and performs processing of deleting the tuple, as shown in FIG. 11, the data node of the global secondary index a may first attempt to search for the tuple to be deleted. If the search succeeds, it indicates that the tuple to be deleted has been filled into the global secondary index a, and the data node of the global secondary index a normally deletes the tuple to be deleted.

Case 2: The tuple (12, Xiao Wang, location information, version information) has not been processed in a data filling procedure for creating the GSI online, or filled into the global secondary index a. When the data node of the global secondary index a performs data row deletion processing, the tuple cannot be found.

In this case, this application provides a data processing method. As shown in FIG. 11, the data node of the global secondary index a may first attempt to search for the tuple to be deleted. If the search fails, the data node may first determine whether the global secondary index a is still being created online. If the global secondary index a is not being created online, it indicates that the tuple to be deleted does not exist, and the request may be incorrect. If the global secondary index a is still being created online, it indicates that the tuple to be deleted is not filled in the global secondary index a. In this case, the information about the data of the row to be deleted can be obtained from the WHERE deletion condition of the SQL statement "DELETE FROM a WHERE classid=$3 AND name=$2 AND location information=$4 AND version information=$5", and includes the data content of all the columns corresponding to the row to be deleted. The information about the data can be used to perform filling and assemble the overall data (12, Xiao Wang, location information, version information) of the tuple to be deleted. As shown in FIG. 11, the assembled tuple to be deleted is first inserted into the global secondary index a, and then the tuple is immediately deleted. In this case, effect of deleting the tuple (12, Xiao Wang, location information, version information) can be presented in the global secondary index a.

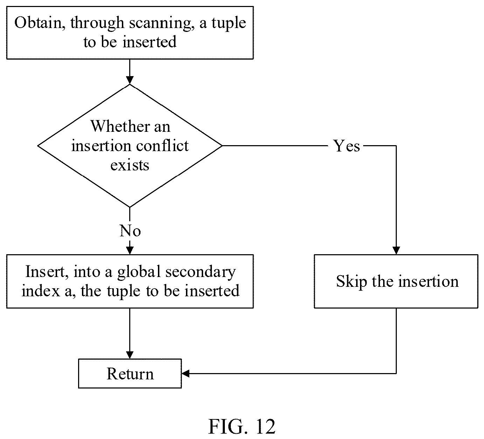

Correspondingly, as shown in FIG. 12, in the data filling procedure for creating the GSI online, the deleted tuple (2, Xiao Wang, 12) can be obtained through scanning subsequently from visible data that may be obtained from the data table A based on the snapshot. Therefore, when the corresponding data node wants to insert the corresponding tuple (12, Xiao Wang, location information, version information) into the global secondary index a, the corresponding data node in this case can quickly position a storage location with the same index key in the global secondary index a based on the index key (class ID). An insertion conflict is found after scanning and comparison, and the same data content row (12, Xiao Wang, location information, version information) on all the columns (the distribution key, index key, additional key, location information, and version information) exists in the global secondary index a. Then, insertion is skipped and returning is directly performed. It may be understood that if no insertion conflict is found after scanning and comparison, the data node of the global secondary index a normally inserts the tuple.

In this way, after creation of the global secondary index a is completed, the data row deleted in the data table A during creation of the global secondary index a is also deleted in the global secondary index a, and the data is consistent.

In still another scenario, for example, an IUD operation is an UPDATE update operation. After a row of data (tuple) is updated in the data table A through processing of the UPDATE operation, the data node of the global secondary index a may update the corresponding data row in the global secondary index a.

In an example, a tuple (2, Xiao Wang, 12) is updated to (2, Xiao Li, 12) in the data table A based on a condition studentid=12. The tuple update operation on the data table A may be performed by using an SQL statement "UPDATE A SET name="Xiao Li" WHERE studentid=12 RETURNING studentid_new, name_new, classid_new, location information_new, version information_new, studentid, name, classid, location information, version information". A meaning of the statement is to update the tuple (2, Xiao Wang, 12) to (2, Xiao Li, 12) based on the update condition, and return data content before and after the update in all columns, including the class ID, student name, student ID, location information, and version information. The SQL statement may be calculated by the coordinator node 2 based on the distribution key student ID by using a hash algorithm, and sent to the corresponding data node for execution.

Then, a data update operation on the global secondary index a may be performed by using an SQL statement "UPDATE a SET classid=$3 AND name=$2 AND location information=$4 AND version information=$5 WHERE classid=$8 AND name=$7 AND location information=$9 AND version information=$10". A meaning of the statement is to extract the required class ID, student name, location information, and version information from the data content on all the returned columns as the update condition, and updates the corresponding tuple (12, Xiao Wang, location information, version information) to (12, Xiao Li, location information_new, version information_new) in the global secondary index a. The SQL statement may be calculated based on the distribution key class ID by using a hash algorithm by the coordinator node 2 or the data node that executes the update operation on the data table A, and sent to the corresponding data node for execution the update operation.

When the data node updates the corresponding data in the global secondary index a, the update operation is divided into two steps of deleting the old tuple and inserting the new tuple. To be specific, the old tuple (12, Xiao Wang, location information, version information) is deleted first, and then the new tuple (12, Xiao Li, location information_new, version information_new) is inserted. It should be noted that when the old tuple is to be deleted, for the foregoing DELETE operation, Case 2 may occur, that is, the corresponding tuple cannot be found in the global secondary index a. The corresponding processing method is the same as the foregoing description, and details are not described again.

In this way, after creation of the global secondary index a is completed, the data row updated in the data table A during creation of the global secondary index a is also updated in the global secondary index a, and the data is consistent.

Therefore, during data filling, if there is data modification caused by an IUD operation that occurs synchronously in the data table A, data modification may also be correspondingly completed in the global secondary index a in the foregoing manner, to ensure data consistency after creation of the global secondary index a is completed. This can accurately complete data filling during online creation of the global secondary index a without hindering normal execution of the user DML transaction. Finally, the coordinator node 1 notifies and waits for all the nodes to complete update of the metadata of the global secondary index a, and submits the transaction 2. In this step, the coordinator node 1 generates a metadata version modification command and delivers the metadata version modification command to all the other coordinator nodes and data nodes. The metadata version modification command may be an SQL statement ALTER INDEX {a} GSIVAILD. Each node executes the command to set the metadata version to available (public), and then gives feedback to coordinator node 1 for processing completion. Setting to the version available (public) may be setting a status flag bit (indisvalid) corresponding to the global secondary index a on the system catalog to TRUE. After confirming the feedback from all the other nodes, the coordinator node 1 sets the metadata version on the coordinator node 1 to available (public). The coordinator node submits the transaction 2, and the metadata version of the global secondary index a is unified globally in this case.

Creation of the global secondary index a ends.

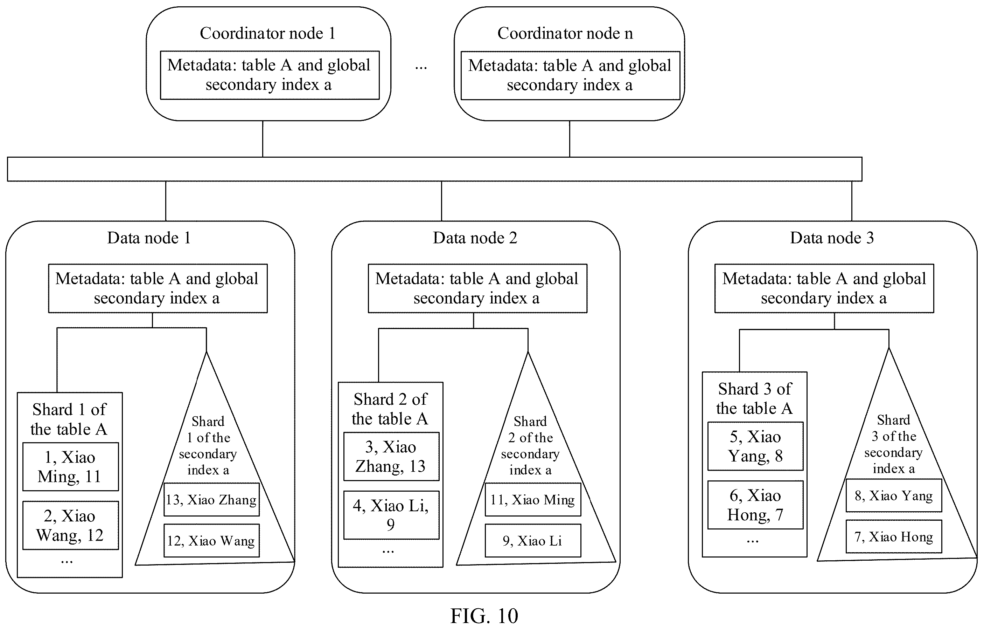

For example, after online creation of the global secondary index a on the data table A is completed, data distribution of the data in the global secondary index a in the distributed system may be shown in FIG. 10. The global secondary index a is sharded into a shard 1 (including data of the classid [13, 12, ...]) of the global secondary index a, a shard 2 (including data of the classid [11, 9, ...]) of the global secondary index a, and a shard 3 (including data of the classid [8, 7, ...]) of the global secondary index a. The shard 1 of the global secondary index a is stored on a data node 1, the shard 2 of the global secondary index a is stored on a data node 2, and the shard 3 of the global secondary index a is stored on a data node 3.

As shown in FIG. 10, each shard of the global secondary index a is a data structure sorted by using the index key classid defined by the user. In this way, when the user performs query based on the classid, the user can quickly query desired data based on the global secondary index a.

In another example, the method for creating the index provided in this application may also be applied to a cashier system of a mall based on a distributed system architecture. For example, the cashier system of the mall has a data table. The data table is named B, and attribute columns include counterid counter ID (distribution key), fno mall floor quantity, and cashierid cashier ID. Table 2 shows data in the entire data table B.

**Table 2**

| counterid | fno | cashierid |
|---|---|---|
| 1 | 1 | STF100023 |
| 1 | 1 | STF100025 |
| 2 | 1 | STF231567 |
| 3 | 2 | MNG695478 |
| 4 | 3 | STF777777 |
| 4 | 3 | STF666666 |
| ... | ... | ... |

The counterid is an auto-increment distribution key. A total quantity of counters is fixed, and therefore, the data table B is distributed based on a range range.

When a user inputs a request for creating a global secondary index on the data table B, a coordinator node (a server or a virtual machine on the server) in the cashier system of the mall may receive the request and be responsible for creating the global secondary index on the data table B.

The following describes the solution by using an example in which the user creates the global secondary index b on the data table B, where attributes of the global secondary index b are the cashierid cashier ID (an index key and a distribution key), the counterid counter ID (an additional key), and the fno mall floor quantity (an additional key).

The creation statement may be "CREATE GLOBAL INDEX CONCURRENTLY b on B (cashierid) CONTAINING (counterid, fno) DISTRIBUTE BY RANGE (cashierid)", where CREATE GLOBAL INDEX indicates to create the global secondary index, CONTAINING indicates the additional key, and DISTRIBUTE BY RANGE indicates to distribute in a range distribution manner. A meaning of the statement is to create, on the base table B whose distribution key is the counter ID, the global secondary index b whose index key and distribution key are the cashier ID, distribution manner is range distribution, and additional key are the counter ID and the mall floor quantity.

First, the request, for creating the global secondary index, input by the user is sent to the coordinator node in the cashier system of the mall. The coordinator node may be a coordinator node 1 responsible for creating the global secondary index b.

Then, the coordinator node 1 starts a transaction 1, notifies and waits for all nodes to complete initialization of the global secondary index b, and then submits the transaction 1. In this step, an execution logic is basically consistent with that of the foregoing student status system. The coordinator node 1 notifies and waits for each node to initialize metadata of the global secondary index b and set a version to write only (write only), and submits the transaction 1. Setting to write only (write only) may be setting a status flag bit (indisvalid) corresponding to the global secondary index b on a system catalog to FALSE. During entire creation and initialization of the global secondary index b, a SHARE LOCK lock may be added to the data table B. The metadata version of the global secondary index b is unified globally in this case.

Then, the coordinator node 1 starts a transaction 2, and notifies and waits for all the nodes to complete waiting for all currently active transactions. In this step, an execution logic is basically consistent with that of the foregoing student status system. The coordinator node 1 generates a waiting command ALTER TABLE {B} GSIWAITALL. Implementation of waiting for all the DML transactions may be implemented by waiting for completion of transactions that conflict with obtaining the SHARE LOCK lock on the data table B. Then, the coordinator node 1 adds a SHARE UPDATE EXCLUSIVE LOCK lock to the data table B. The coordinator node 1 delivers the command to all the nodes, waits for each node to complete waiting for a currently active transaction to end, and then adds the SHARE UPDATE EXCLUSIVE LOCK lock to the data table B. Alternatively, in another case, the coordinator node 1 may also first wait for all the nodes to complete the active transactions and then uniformly adds the SHARE UPDATE EXCLUSIVE LOCK lock to each node.

Then, the coordinator node 1 organizes the data of the data table B to fill the global secondary index b. In this step, an execution logic is basically consistent with that of the foregoing student status system. The coordinator node 1 may first add a ROW EXCLUSIVE LOCK lock to the global secondary index b. The row exclusive lock is used to block other operations, for example, a DDL operation, but not block an IUD operation on the global secondary index b. Then, the coordinator node 1 obtains a current snapshot, starts to organize, from the data table B under the snapshot, the data (columns corresponding to the distribution key, index key, and additional key) required by the global secondary index b, and fills the data into the global secondary index b.

The data can be filled by using an SQL statement "INSERT INTO b (cashierid, fno, counterid, location information, version information) SELECT cashiered, counterid, fno, location information, version information FROM B". A meaning of the statement is to select the cashier ID, the mall floor quantity, the counter ID, and the version information from the data table B and insert the cashier ID, the mall floor quantity, the counter ID, and the version information into the global secondary index b. The location information indicates a location of the data in the data table, and for example, includes information (xc_node_hash) about a node in which the data is located and a storage location (ctid) of the data in the node. A data node into which the data is to be inserted is obtained based on a value of the distribution key counterid of the global secondary index b in a range distribution algorithm.

When the coordinator node 1 confirms that all the data under the snapshot has been scanned and filled into the global secondary index b, filling ends.

Similarly, during filling on the global secondary index b of the data node, data modification caused by an IUD operation that occurs synchronously on the data table B also needs to be correspondingly reflected in the global secondary index b, to ensure data consistency after creation completes. For example, during data filling, when a same user or another user inputs an IUD operation request on the data table B, the IUD operation request is also sent to a coordinator node 2 in the cashier system of the mall. Optionally, the coordinator node 2 and the coordinator node 1 may be the same or may be different. The coordinator node 2 may deliver a command to a corresponding data node based on the IUD operation request, and the corresponding data node performs IUD processing on data. In this case, a data node may need to simultaneously perform data filling and IUD processing on the global secondary index b.

In a scenario, after a row of new data (tuple) is inserted into the data table B through processing of an INSERT operation, the data node of the global secondary index b may obtain data (columns corresponding to a distribution key, index key, and additional key) required by the global secondary index b and insert the data into the global secondary index b. In an example, a data tuple (2, 1, STF231567) is inserted into the base table B. The data tuple insert operation on the data table B may be performed by using an SQL statement "INSERT INTO B (counterid, fno, cashierid) VALUES (2, 1, STF231567) RETURNING counterid, fno, cashierid, location information, and version information". A meaning of the statement is to insert the tuple (2, 1, STF231567) to be inserted and return data content on all columns of the tuple, including the cashier ID, mall floor quantity, counter ID, location information, and version information. The SQL statement may be calculated by the coordinator node 2 based on the distribution key counter ID in a range distribution algorithm, and then sent to the corresponding data node for execution.

Then, a tuple insert operation on the global secondary index b may be performed by using an SQL statement "INSERT INTO a (cashierid, counterid, fno, location information, version information) VALUES ($3, $1, $2, $4, $5)". A meaning of the statement is to extract the required cashier ID, counter ID, mall floor quantity, location information, and version information from the returned data content, form a tuple, and insert the tuple into the global secondary index b. The SQL statement may be calculated based on the distribution key cashier ID in a range distribution algorithm by the coordinator node 2 or the data node that executes the insert operation on the data table B, and then sent to the corresponding data node for execution. After creation of the global secondary index b is completed, the tuple added to the data table B during creation of the global secondary index b also exists in the global secondary index, and the data is consistent.

In another scenario, after a row of old data (tuple) is deleted from the data table B through processing of a DELETE operation, the data node of the global secondary index a may delete the corresponding data row from the global secondary index b. In an example, a tuple (3, 2, MNG695478) is deleted from the data table B based on a condition fno=2. The tuple delete operation on the data table B may be performed by using an SQL statement "DELETE FROM B WHERE fno=2 RETURNING counterid, fno, cashierid, location information, and version information". A meaning of the statement is to delete the tuple (3, 2, MNG695478) based on the deletion condition and return data content on all columns, including the cashier ID, mall floor quantity, counter ID, location information, and version information. The deletion condition on the data table B is the mall floor quantity, and does not include the distribution key (counter ID). Therefore, the SQL statement needs to be broadcast by the coordinator node 2 to all data nodes for attempting to delete the tuple.

Then, a data delete operation on the global secondary index b may be performed by using an SQL statement "DELETE FROM b WHERE cashierid=$3 AND counterid=$1 AND fno=$2 AND location information=$4 AND version information=$5". A meaning of the statement is to extract required cashier ID, counter ID, mall floor quantity, location information, and version information from the returned data content as the deletion condition, and delete a corresponding tuple (MNG695478, 3, 2, location information, version information) from the global secondary index b. The SQL statement may be calculated based on the distribution key cashier ID in a range distribution algorithm by the coordinator node 2 or the data node that executes the delete operation on the data table B, and sent to the corresponding data node for executing the delete operation.

Similarly, when the data node of the global secondary index b receives an SQL request and performs processing of deleting the tuple (MNG695478, 3, 2, location information, version information), the following two cases may occur.

Case 1: The tuple (MNG695478, 3, 2, location information, version information) has been processed in a data filling procedure for creating the GSI online, and filled into the global secondary index b. When the data node of the global secondary index b performs data row deletion processing, the tuple can be found from the data of the global secondary index b, and is normally deleted.

Case 2: The tuple (MNG695478, 3, 2, location information, version information) has not been processed in a data filling procedure for creating the GSI online, or filled into the global secondary index b. When the data node of the global secondary index b performs data row deletion processing, the tuple cannot be found. Similarly, in this case, this application provides a data processing method, as shown in FIG. 11.

In the data processing method, the data node may obtain, from the WHERE deletion condition of the SQL statement "DELETE FROM b WHERE cashierid=$3 AND counterid=$1 AND fno=$2 AND location information=$4 AND version information=$5", information about the data of the deleted row, where the information about the data includes the data content of all the columns corresponding to the deleted row. The information about the data can be used to perform filling and assemble the overall data (MNG695478, 3, 2, location information, version information) of the tuple to be deleted. The assembled tuple to be deleted is first inserted into the global secondary index b, and then the tuple is immediately deleted. In this case, effect of deleting the tuple (MNG695478, 3, 2, location information, version information) can be presented in the global secondary index b.

Correspondingly, as shown in FIG. 12, in the data filling procedure for creating the GSI online, the deleted tuple (3, 2, MNG695478) can be obtained through scanning subsequently from visible data that may be obtained from the data table B based on the snapshot. Therefore, when the corresponding data node wants to insert the corresponding tuple (MNG695478, 3, 2, location information, version information) into the global secondary index b, the corresponding data node in this case can quickly position a storage location with the same index key in the global secondary index b based on the index key (cashier ID). After scanning and comparison, it is found that the same data content row (MNG695478, 3, 2, location information, version information) on all the columns (the distribution key, index key, additional key, location information, and version information) exists in the global secondary index b. Then, insertion is skipped and returning is directly performed.

In this way, after creation of the global secondary index b is completed, the data row deleted during creation of the global secondary index b in the data table B is also deleted from the global secondary index b, and the data is consistent.

In still another scenario, after a row of data (tuple) is updated in the data table B through processing of an UPDATE operation, the data node of the global secondary index b may update the corresponding data row in the global secondary index a. In an example, a tuple (3, 2, MNG695478) is updated to (3, 10, MNG695478) in the data table B based on a condition fno=2. The tuple update operation on the data table A may be performed by using an SQL statement "UPDATE B SET fno=10 WHERE fno=2 RETURNING counterid_new, fno_new, cashierid_new location information_new, version information_new, counterid, fno, cashierid, location information, and version information". A meaning of the statement is to update the tuple (3, 2, MNG695478) to (3, 10, MNG695478) based on the update condition and return data content before and after the update in all columns, including the cashier ID, mall floor quantity, counter ID, location information, and version information. The SQL statement may be broadcast by the coordinator node 2 to all the data nodes for attempting to delete the tuple, because the deletion condition does not include the distribution key.

Then, a data update operation on the global secondary index b may be performed by using an SQL statement "UPDATE b SET cashierid=$3, counterid=$1 AND fno=$3 location information=$4 AND version information=$5 WHERE cashierid=$8 AND counterid=$6 AND fno3=7 AND location information=$9 AND version information=$10". A meaning of the statement is to extract required cashier ID, counter ID, mall floor quantity, location information, and version information from the returned data content as the update condition, and update a corresponding tuple (MNG695478, 3, 2, location information, version information) to (MNG695478, 3, 10, location information_new, version information_new) in the global secondary index b. The SQL statement may be calculated based on the cashier ID in a range distribution algorithm by the coordinator node 2 or the data node that executes the update operation on the data table B, and sent to the corresponding data node for executing the update operation.

When the data node updates the corresponding data in the global secondary index b, the update operation is divided into two steps of deleting the old tuple and inserting the new tuple. To be specific, the old tuple (MNG695478, 3, 2, location information, version information) is deleted first, and then the tuple (MNG695478, 3, 10, location information, version information) is inserted. It should be noted that when the old tuple is to be deleted, for the foregoing DELETE operation, Case 2 may occur, that is, the corresponding tuple cannot be found in the global secondary index b. The corresponding processing method is the same as the foregoing description, and details are not described again.

In this way, after creation of the global secondary index b is completed, the data row updated in the data table B during creation of the global secondary index b is also updated in the global secondary index b, and the data is consistent.

Finally, the coordinator node 1 notifies and waits for all the nodes to complete update of the metadata of the global secondary index b, and submits the transaction 2. In this step, an execution logic is basically consistent with that of the foregoing student status system. The coordinator node 1 generates a metadata version modification command ALTER INDEX {b} GSIVAILD and delivers the metadata version modification command to all the nodes, where modification of the metadata version may be setting a status flag indisvalid corresponding to the global secondary index b on a system catalog to TRUE, and the coordinator node 1 waits for each node to complete modification of the metadata version. The coordinator node 1 submits the transaction 2, and the metadata version of the global secondary index b is unified globally in this case. Creation of the global secondary index b ends.

The global secondary index b is a data structure sorted by using the index key cashierid defined by the user. In this way, when the user performs query based on the cashierid, the user can quickly query desired data based on the global secondary index b.

In still another example, the method for creating the index provided in this application may also be applied to a product sales system of an e-commerce company based on a distributed system architecture. For example, the product sales system has a data table. The data table is named C, and attribute columns include sales_id sales record ID, saleman sale man, saledate sale date, and city sale city (distribution key). Table 3 shows data in the entire data table C.

**Table 3**

| sales_id | saleman | saledate | city |
|---|---|---|---|
| 1 | Alan | 2023-06-02-10-11 | Beijing |
| 2 | Bob | 2023-06-02-11-23 | Shenzhen |
| 3 | Cathy | 2023-06-02-11-42 | Shanghai |
| 4 | Bob | 2023-06-02-14-55 | Shenzhen |
| 5 | Tom | 2023-06-02-15-02 | Hangzhou |
| ... | ... | ... | ... |

The city is the distribution key. The data table C is distributed in a list list because products are sold only in a few fixed cities. Specifically, sale men are also within a fixed range of personnel.

When a user inputs a request for creating a global secondary index on the data table C, a coordinator node (a server or a virtual machine on the server) in the product sales system may receive the request and be responsible for creating the global secondary index on the data table C. The following describes the solution by using an example in which the user creates the global secondary index c on the data table C, where attributes of the global secondary index c are the saleman sale man (index key and distribution key), saledate sale date (additional key), and sales_id sales record ID (additional key).

A statement for creating the global secondary index c may be "CREATE GLOBAL INDEX CONCURRENTLY c on C (saleman) CONTAINING (saledate, sales_id) DISTRIBUTE BY LIST (saleman)", where CREATE GLOBAL INDEX indicates to create the global secondary index, CONTAINING indicates the additional key, and DISTRIBUTE BY LIST indicates to distribute in a list list manner. A meaning of the statement is to create, on the data table C whose distribution key is the sales record ID, the global secondary index c whose index key and distribution key are the sale man, distribution manner is list distribution, and additional key is the sale date and the sales record ID.

First, the request, for creating the global secondary index, input by the user is sent to the coordinator node in the product sales system. The coordinator node may be a coordinator node 1 responsible for creating the global secondary index C.

Then, the coordinator node 1 starts a transaction 1, notifies and waits for all nodes to complete initialization of the global secondary index c, and then submits the transaction 1. In this step, an execution logic is basically consistent with that of the foregoing student status system. The coordinator node 1 notifies and waits for each node to initialize metadata of the global secondary index c and set a version to write only (write only), and submits the transaction 1. Setting to write only (write only) may be setting a status flag bit (indisvalid) corresponding to the global secondary index c on a system catalog to FALSE. During entire creation and initialization of the global secondary index c, a SHARE LOCK lock may be added to the data table C. The metadata version of the global secondary index c is unified globally in this case.

Then, the coordinator node 1 starts a transaction 2, and notifies and waits for all the nodes to complete waiting for all currently active transactions. In this step, an execution logic is basically consistent with that of the foregoing student status system. The coordinator node 1 generates a waiting command ALTER TABLE {C} GSIWAITALL. Implementation of waiting for all the DML transactions may be implemented by waiting for completion of transactions that conflict with obtaining the SHARE LOCK lock on the data table C. Then, the coordinator node 1 adds a SHARE UPDATE EXCLUSIVE LOCK lock to the data table C. The coordinator node 1 delivers the command to all the nodes, waits for each node to complete waiting for a currently active transaction to end, and then adds the SHARE UPDATE EXCLUSIVE LOCK lock to the data table C. Alternatively, in another case, the coordinator node 1 may also first wait for all the nodes to complete the active transactions and then uniformly adds the SHARE UPDATE EXCLUSIVE LOCK lock to each node.

Then, the coordinator node 1 organizes the data of the data table C to fill the global secondary index c. In this step, an execution logic is basically consistent with that of the foregoing student status system. The coordinator node 1 may first add a ROW EXCLUSIVE LOCK lock to the global secondary index c. The row exclusive lock is used to block other operations, for example, a DDL operation, but not block an IUD operation on the global secondary index c. Then, the coordinator node 1 obtains a current snapshot, starts to organize, from the data table C under the snapshot, the data (columns corresponding to the distribution key, index key, and additional key) required by the global secondary index c, and fills the data into the global secondary index b.

The data can be filled by using an SQL statement "INSERT INTO c (saleman, saledate, sales_id, location information, version information) SELECT saleman, saledate, sales_id, location information, version information FROM C". A meaning of the statement is to select the sale man, the sale date, the sales record ID, the location information, and the version information from the data table C and insert the sale man, the sale date, the sales record ID, the location information, and the version information into the global secondary index c. The location information indicates a location of the data in the data table, and for example, includes information (xc_node_hash) about a node in which the data is located and a storage location (ctid) of the data in the node. A data node into which the data is to be inserted is obtained based on a value of the distribution key saleman of the global secondary index c in a list distribution algorithm.

When the coordinator node 1 confirms that all the data under the snapshot has been scanned and filled into the global secondary index c, filling ends.

Similarly, during filling on the global secondary index c of the data node, data modification caused by an IUD operation that occurs synchronously on the data table C needs to be correspondingly reflected in the global secondary index c, to ensure data consistency after creation completes. For example, during data filling, when a same user or another user inputs an IUD operation request on the data table C, the IUD operation request is also sent to a coordinator node 2 in the product sales system. Optionally, the coordinator node 2 and the coordinator node 1 may be the same or may be different. The coordinator node 2 may deliver a command to a corresponding data node based on the IUD operation request, and the corresponding data node performs IUD processing on data. In this case, a data node may need to simultaneously perform data filling and IUD processing on the global secondary index c.

In a scenario, after a row of new data (tuple) is inserted into the data table C through processing of an INSERT operation, the data node of the global secondary index c may obtain data (columns corresponding to a distribution key, index key, and additional key) required by the global secondary index c and insert the data into the global secondary index c. In an example, the data tuple (2, Bob, 2023-06-02-11-23, Shenzhen) is inserted into the data table C. The data tuple insert operation on the data table C may be performed by using an SQL statement "INSERT INTO C (sales_id, saleman, saledate, city) VALUES (2, Bob, 2023-06-02-11-23, Shenzhen) RETURNING sales_id, saleman, saledate, city, location information, and version information". A meaning of the statement is to insert the tuple (2, Bob, 2023-06-02-11-23, Shenzhen) to be inserted and return data content on all columns of the tuple, including the sale man, sale date, sale city, location information, and version information. The SQL statement may be calculated by the coordinator node 2 based on the distribution key sale city in a list distribution algorithm, and then sent to the corresponding data node for execution.

Then, tuple insertion on the global secondary index c may be performed by using an SQL statement "INSERT INTO c (saleman, saledate, sale_id, location information, version information) VALUES ($2, $3, $1, location information, version information)". A meaning of the statement is to extract the required sale man, sale date, sale record ID, location information, and version information from the returned data content, form a tuple, and insert the tuple into the global secondary index c. The SQL statement may be calculated based on the distribution key sale man in a list distribution algorithm by the coordinator node 2 or the data node that executes the insert operation on the data table C, and then sent to the corresponding data node for execution. After creation of the global secondary index c is completed, the tuple added to the data table C during creation of the global secondary index c also exists in the global secondary index c, and the data is consistent.

In another scenario, after a row of old data (tuple) is deleted from the data table C through processing of a DELETE operation, the data node of the global secondary index c may delete the corresponding data row from the global secondary index c. For example, the tuple (2, Bob, 2023-06-02-11-23, Shenzhen) is deleted from the data table C based on a condition saledate=2023-06-02-11-23. In an example, the tuple delete operation on the data table C may be performed by using an SQL statement "DELETE FROM C WHERE saledate=2023-06-02-11-23 RETURNING sales_id, saleman, saledate, city, location information, and version information". A meaning of the statement is to delete the tuple (2, Bob, 2023-06-02-11-23, Shenzhen) based on the deletion condition and return data content on all columns of the tuple, including the sale man, sale date, sale city, location information, and version information. The SQL statement may be broadcast by the coordinator node 2 to all the data nodes for attempting to delete the tuple, because the deletion condition does not include the distribution key.

Then, a data delete operation on the global secondary index c may be performed by using an SQL statement "DELETE FROM c WHERE saleman=$2 AND saledate=$3 AND saleid=$1 AND location information=$5 AND version information=$6". A meaning of the statement is to extract required sale man, sale date, sales record ID, location information, and version information from the returned data content as the deletion condition, and delete a corresponding tuple (Bob, 2023-06-02-11-23, 2, location information, version information) from the global secondary index c. The SQL statement may be calculated based on the distribution key sale man in a list distribution algorithm by the coordinator node 2 or the data node that executes the delete operation on the data table C, and sent to the corresponding data node for executing the delete operation.

Similarly, when the data node of the global secondary index c receives an SQL request and performs processing of deleting the tuple (Bob, 2023-06-02-11-23, 2, location information, version information), the following two cases may occur.

Case 1: The tuple (Bob, 2023-06-02-11-23, 2, location information, version information) has been processed in a data filling procedure for creating the GSI online, and filled into the global secondary index c. When the data node of the global secondary index c performs data row deletion processing, the tuple can be found from the data of the global secondary index c, and is normally deleted.

Case 2: The tuple (Bob, 2023-06-02-11-23, 2, location information, version information) has not been processed in a data filling procedure for creating the GSI online, or filled into the global secondary index c. When the data node of the global secondary index c performs deletion processing, the tuple cannot be found. Similarly, in this case, this application provides a data processing method, as shown in FIG. 11.

In the data processing method, information about the data of the deleted row is obtained from the WHERE deletion condition of the SQL statement "DELETE FROM c WHERE saleman=$2 AND saledate=$3 AND saleid=$1 AND location information=$5 AND version information=$6", where the information about the data includes the data content of all the columns corresponding to the deleted row. The information about the data can be used to perform filling and assemble the overall data (Bob, 2023-06-02-11-23, 2, location information, version information) of the tuple to be deleted. The assembled tuple to be deleted is first inserted into the global secondary index c, and then the tuple is immediately deleted. In this case, effect of deleting the tuple (Bob, 2023-06-02-11-23, 2, location information, version information) can be presented in the global secondary index c.

Correspondingly, as shown in FIG. 12, in the data filling procedure for creating the GSI online, the deleted tuple (2, Bob, 2023-06-02-11-23, Shenzhen) can be obtained through scanning subsequently from visible data that may be obtained from the data table C based on the snapshot. Therefore, when the corresponding data node wants to insert the corresponding tuple (Bob, 2023-06-02-11-23, 2, location information, version information) into the global secondary index c, the corresponding data node in this case can quickly position a storage location with the same index key in the global secondary index c based on the index key (sale man). After scanning and comparison, it is found that the same data content row (Bob, 2023-06-02-11-23, 2, location information, version information) on all the columns (the distribution key, index key, additional key, location information, and version information) exists in the global secondary index c. Then, insertion is skipped and returning is directly performed.

In this way, after creation of the global secondary index c is completed, the data row deleted in the data table C during creation of the global secondary index c is also deleted in the global secondary index, and the data is consistent.

In still another scenario, after a row of data (tuple) is updated in the data table C through processing of an UPDATE operation, the data node of the global secondary index c may update the corresponding data row in the global secondary index c. In an example, the tuple (3, Cathy, 2023-06-02-11-42, Shanghai) is updated to (5, Cathy, 2023-06-02-11-42, Shanghai) in the data table C with a condition city=Shanghai. Tuple update on the data table A may be performed by using an SQL statement "UPDATE C SET slae_id=5 WHERE city=Shanghai RETURNING sale_id_new, slaeman _new, saledata_new, city_new, location information_new, version information_new, sale_id, saleman, saledata, city, location information, version information". A meaning of the statement is to update the tuple (3, Cathy, 2023-06-02-11-42, Shanghai) to (5, Cathy, 2023-06-02-11-42, Shanghai) based on the update condition and return data content before and after the update in all columns, including the sale man, sale date, sale city, location information, and version information. The SQL statement may be calculated by the coordinator node 2 based on the distribution key sale city in a list distribution algorithm, and then sent to the corresponding data node for execution.

Then, a data update operation on the global secondary index c may be performed by using an SQL statement "UPDATE c SET saleman=$2, saledate=$3, sale_id=$3, location information=$5, version information=$6 WHERE saleman=$8 AND saledate=$9 AND sale_id=7 AND location information=$11 AND version information=$12". A meaning of the statement is to extract required sale man, sale date, sales record ID, location information, and version information from the returned data content as the update condition, and update the corresponding tuple (Cathy, 2023-06-02-11-42, 3, location information, version information) to (Cathy, 2023-06-02-11-42, 5, location information_new, version information_new) in the global secondary index c. The SQL statement may be calculated based on the sale man in a list distribution algorithm by the coordinator node 2 or the data node that executes the update operation on the data table C, and sent to the corresponding data node for executing the update operation.

When the data node updates the corresponding data in the global secondary index c, the update operation is divided into two steps of deleting the old tuple and inserting the new tuple. To be specific, the old tuple (Cathy, 2023-06-02-11-42, 3, location information, version information) is deleted first, and then the new tuple (Cathy, 2023-06-02-11-42, 5, location information_new, version information_new) is inserted. It should be noted that when the old tuple is to be deleted, for the foregoing DELETE operation, Case 2 may occur, that is, the corresponding tuple cannot be found in the global secondary index c. The corresponding processing is the same as the foregoing description, and details are not described again.

In this way, after creation of the global secondary index c is completed, the data row updated in the data table C during creation of the global secondary index c is also updated in the global secondary index c, and the data is consistent.

Finally, the coordinator node 1 notifies and waits for all the nodes to complete update of the metadata of the global secondary index c, and submits the transaction 2. In this step, an execution logic is basically consistent with that of the foregoing student status system. The coordinator node 1 generates a metadata version modification command ALTER INDEX {c} GSIVAILD and delivers the metadata version modification command to all the nodes, and the coordinator node 1 waits for each node to complete modification of the metadata version. The coordinator node 1 submits the transaction 2, and the metadata version of the global secondary index c is unified globally in this case. Creation of the global secondary index c ends.

The global secondary index c is a data structure sorted by using the index key saleman defined by the user. In this way, when the user performs query based on the saleman field, the user can quickly query desired data based on the global secondary index c.

In yet another example, the method for creating the index provided in this application may be applied to a student document system based on a distributed system architecture. For example, the student document system has a data table. The data table is named D, and attribute columns include a studentid student ID (distribution key), a docid document ID (partition key), a name student name, and a classid class ID. Table 4 shows data in the entire data table D.

**Table 4**

| studentid | docid | name | classid |
|---|---|---|---|
| 1 | 100101 | Xiao Ming | 11 |
| 2 | 500132 | Xiao Wang | 12 |
| 3 | 200177 | Xiao Zhang | 13 |
| 4 | 200211 | Xiao Li | 9 |
| 5 | 300223 | Xiao Yang | 8 |
| 6 | 400154 | Xiao Hong | 7 |
| ... | | ... | ... |

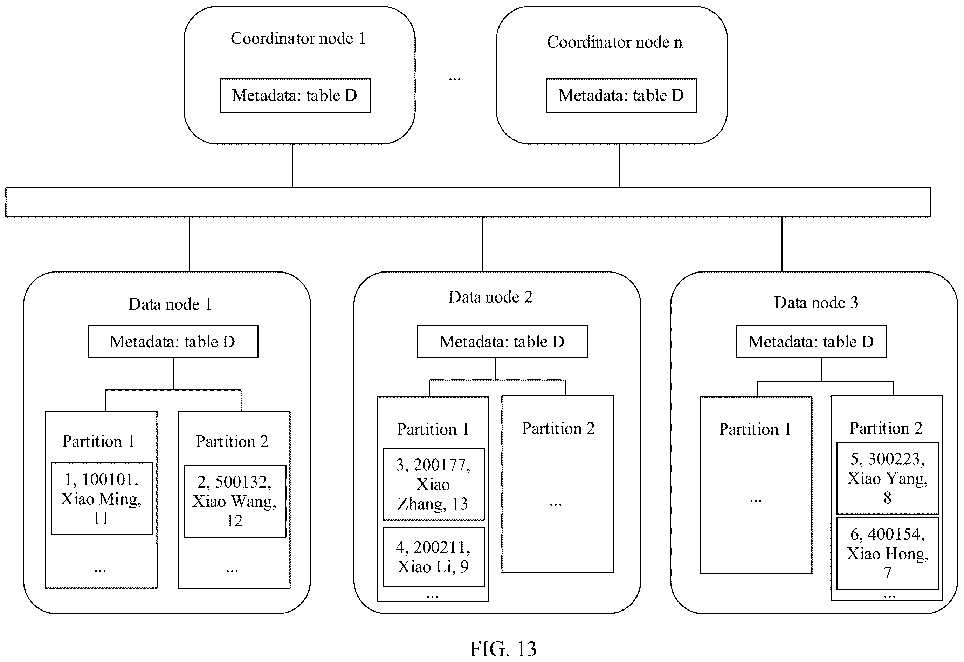

The studentid is an auto-increment and unique attribute. Therefore, the data table D uses hash hash distribution, and the data is evenly distributed to each node in the distributed system based on a hash algorithm and the column studentid. In addition, on each node, the data is partitioned and stored based on a value of the partition key docid. To be specific, the data table D is stored on the data node based on the column studentid in the hash algorithm, and is further partitioned and stored on the data node based on the partition key doc id. For example, data whose docid is less than 300000 is stored in one partition, and data whose doc id is greater than or equal to 300000 is stored in another partition. As shown in FIG. 13, a data node 1 (includes data with the studentid [1, 2, ...]), where a tuple (1, 100101, Xiao Ming, 11) is stored in a partition 1, and a tuple (2, 500132, Xiao Wang, 12) is stored in a partition 2; and a data node 2 (includes data with the studentid [3, 4, ...]), where a tuple (3, 200177, Xiao Zhang, 13) and a tuple (4, 200211, Xiao Li, 9) are stored in a partition 1.

When a user inputs a request for creating a global secondary index on the data table D, a coordinator node (a server or a virtual machine on the server) in the document system may receive the request and be responsible for creating the global secondary index on the data table D.

The following describes the solution by using an example in which the user creates the global secondary index d on the data table D, where attributes of the global secondary index d are the classid class ID (an index key and a distribution key), the docid document ID (an additional key), and the name student name (an additional key).

A statement for creating the global secondary index d may be "CREATE GLOBAL INDEX CONCURRENTLY d on D (classid) CONTAINING (docid, name) DISTRIBUTE BY Hash (classid)", where CREATE GLOBAL INDEX indicates to create the global secondary index, CONTAINING indicates the additional key, and DISTRIBUTE BY HASH indicates to distribute in a hash distribution manner. A meaning of the statement is to create, on the data table D whose distribution key is the class ID, the global secondary index d whose index key and distribution key are the class ID, distribution manner is hash distribution, and additional key is the student name and the document ID.

First, the request, for creating the global secondary index, input by the user is sent to the coordinator node in the document system. The coordinator node may be a coordinator node 1 responsible for creating the global secondary index d.

Then, the coordinator node 1 starts a transaction 1, notifies and waits for all nodes to complete initialization of the global secondary index d, and then submits the transaction 1. In this step, the coordinator node 1 delivers a creation instruction to all other coordinator nodes and data nodes. Each other coordinator node and data node initializes metadata of the global secondary index d, sets a metadata version to write only (write only), and then gives feedback to the coordinator node 1 for processing completion. Setting to write only (write only) may be setting a status flag bit (indisvalid) corresponding to the global secondary index d on a system catalog to FALSE. During entire creation and initialization of the global secondary index d, a share lock (SHARE LOCK) can be added to the data table D. The SHARE LOCK lock may also be referred to as a read lock, and is used to block other operations except a query operation, for example, an IUD operation, to ensure that the data in the data table D remains unchanged.

After the coordinator node 1 confirms that the feedback indicating completion of the foregoing operation on all the other nodes is received, the coordinator node 1 creates and initializes the metadata of the global secondary index d, sets the metadata version to write only (write only), and adds the SHARE LOCK lock to the data table D in this process. The coordinator node 1 submits the transaction 1, and the metadata version of the global secondary index d is unified globally in this case.

Then, the coordinator node 1 starts a transaction 2, and notifies and waits for all the nodes to complete waiting for all currently active transactions. In this step, the coordinator node 1 generates a waiting command and delivers the waiting command to all the other coordinator nodes and data nodes. The waiting command may be an SQL statement: ALTER TABLE {D} GSIWAITALL. The nodes execute the command and wait for end of all the currently active DML transactions on the data table D. Implementation of waiting for all the DML transactions may be implemented by waiting for completion of transactions that conflict with the SHARE LOCK lock on the data table D. The transactions that conflict with the SHARE LOCK lock herein may be understood as the other operations except the query operation blocked above, for example, the IUD operation. After waiting completes, a share update exclusive lock (SHARE UPDATE EXCLUSIVE LOCK) is added to the data table D. This does not block a read operation and a DML operation on the data table D. Then, the coordinator node 1 is fed back that processing of the operation is complete. After the coordinator node 1 confirms that the feedback indicating the operation is complete is received from all the other nodes, the coordinator node 1 waits for end of all the currently active DML transactions on the data table D on the node, and adds the SHARE UPDATE EXCLUSIVE LOCK lock to the data table D. Alternatively, in another case, the coordinator node 1 may also first wait for all the nodes to complete the active transactions and then the coordinator node uniformly adds the lock to each node.

Then, the coordinator node 1 organizes the data of the data table D to fill the global secondary index d. In this step, the coordinator node 1 first adds a row exclusive lock (ROW EXCLUSIVE LOCK) to the global secondary index d. The row exclusive lock is used to block other operations, for example, a DDL operation, but not block an IUD operation on the global secondary index d. Then, the coordinator node 1 obtains a current snapshot, starts to organize, from the data table D under the snapshot, the data (columns corresponding to the distribution key, index key, and additional key) required by the global secondary index d, and fills the data into the global secondary index d. The data can be filled by using an SQL statement "INSERT INTO d (classid, docid, name, location information, version information, partition information) SELECT classid, docid, name, location information, version information, partition information FROM A". A meaning of the statement is to select the class ID, the document ID, the student name, the location information, the version information, and the partition information from the data table D and insert the class ID, the document ID, the student name, the location information, the version information, and the partition information into the global secondary index d. The location information indicates a location of the data in the data table, and includes information (xc_node_hash) about a node in which the data is located and a storage location (ctid) of the data in the node. The partition information indicates a partition location of the data in the data table, and includes partition information (tableoid) of the node in which the data is located. A data node into which the data is to be inserted is obtained based on a value of the distribution key classid of the global secondary index d by using a hash algorithm.

When the coordinator node 1 confirms that all the data under the snapshot has been scanned and filled into the global secondary index d, filling ends.

Similarly, during filling on the global secondary index d of the data node, data modification caused by an IUD operation that occurs synchronously on the data table D also needs to be correspondingly reflected in the global secondary index d, to ensure data consistency after creation completes. For example, during data filling, when a same user or another user inputs an IUD operation request on the data table D, the IUD operation request is also sent to a coordinator node in the student document system 2. Optionally, the coordinator node 2 and the coordinator node 1 may be the same or may be different. The coordinator node 2 may deliver a command to a corresponding data node based on the IUD operation request, and the corresponding data node performs IUD processing on data. In this case, a data node may need to simultaneously perform data filling and IUD processing on the global secondary index c.

In a scenario, after a row of new data (tuple) is inserted into the data table D through processing of an INSERT operation, the data node of the global secondary index d may obtain data (a distribution key, index key, and additional key) required by the global secondary index d and insert the data into the global secondary index d. For example, the data tuple (2, 500132, Xiao Wang, 12) is inserted into the data table D. The data tuple insert operation on the data table D may be performed by using an SQL statement "INSERT INTO D (studentid, docid, name, classid) VALUES (2, 500132, Xiao Wang, 12) RETURNING studentid, docid, name, classid, location information, version information, and partition information". A meaning of the statement is to insert the tuple (2, 500132, Xiao Wang, 12) to be inserted and return data content on all columns of the tuple, including the class ID, student name, student ID, location information, version information, and partition information. The SQL statement may be calculated by the coordinator node 2 based on the distribution key student ID by using a hash algorithm, and then sent to the corresponding data node for execution.

Then, tuple insertion on the global secondary index d may be performed by using an SQL statement "INSERT INTO d (classid, docid, name, location information, version information, and partition information) VALUES ($4, $2, $3, $5, $6, $7)". A meaning of the statement is to extract the required class ID, document ID, student name, location information, version information, and partition information from returned data content, form a tuple, and insert the tuple into the global secondary index d. The SQL statement may be calculated based on the distribution key class ID by using a hash algorithm by the coordinator node 2 or the data node that executes the insert operation on the data table D, and then sent to the corresponding data node for execution. After creation of the global secondary index d is completed, the tuple added to the data table D during creation of the global secondary index d also exists in the global secondary index d, and the data is consistent.

In another scenario, after a row of old data (tuple) is deleted from the data table D through processing of a DELETE operation, the data node of the global secondary index d may delete the corresponding data row from the global secondary index d. In an example, a tuple (2, 500132, Xiao Wang, 12) is deleted from the data table D based on a condition studentid=2. The tuple delete operation on the data table D may be performed by using an SQL statement "DELETE FROM D WHERE studentid=2 RETURNING studentid, docid, name, classid, location information, version information, and partition information". A meaning of the statement is to delete the tuple (2, 500132, Xiao Wang, 12) based on the deletion condition and return data content on all columns, including the class ID, student name, student ID, location information, version information, and partition information. The deletion condition on the data table D includes the distribution key (student ID). Therefore, the SQL statement may be calculated by the coordinator node 1 based on the distribution key student ID by using a hash algorithm, and sent to the corresponding data node for execution.

Then, a data delete operation on the global secondary index d may be performed by using an SQL statement "DELETE FROM d WHERE classid=$4 AND docid=$2 AND name=$3 AND location information=$5 AND version information=$6 AND partition information=$7". A meaning of the statement is to extract required class ID, student name, location information, version information, and partition information from the returned data content as the deletion condition, and delete a corresponding tuple (12, 500132, Xiao Wang, location information, version information, partition information) from the global secondary index d. The SQL statement may be calculated based on the distribution key class ID by using a hash algorithm by the coordinator node 2 or the data node that executes the delete operation on the data table D, and sent to the corresponding data node for execution the delete operation.

Similarly, when the data node of the global secondary index d receives an SQL request and performs processing of deleting the tuple (12, 500132, Xiao Wang, location information, version information, partition information), the following two cases may occur.

Case 1: The tuple (12, 500132, Xiao Wang, location information, version information, partition information) has been processed in a data filling procedure for creating the GSI online, and filled into the global secondary index d. When the data node of the global secondary index d performs data row deletion processing, the tuple can be found from the data of the global secondary index d, and is normally deleted.

Case 2: The tuple (12, 500132, Xiao Wang, location information, version information, partition information) has not been processed in a data filling procedure for creating the GSI online, or filled into the global secondary index d. When the data node of the global secondary index d performs data row deletion processing, the tuple cannot be found. Similarly, an embodiment of this application provides a data processing method.

In the data processing method, information about the data of the deleted row is obtained from the WHERE deletion condition of the SQL statement "DELETE FROM d WHERE classid=$4 AND docid=$2 AND name=$3 AND location information=$5 AND version information=$6 AND partition information=$7", where the information about the data includes the data content of all the columns corresponding to the deleted row. The information about the data can be used to perform filling and assemble the overall data (12, 500132, Xiao Wang, location information, version information, partition information) of the tuple to be deleted. The assembled tuple to be deleted is first inserted into the global secondary index d, and then the tuple is immediately deleted. In this case, effect of deleting the tuple (12, 500132, Xiao Wang, location information, version information, partition information) can be presented in the global secondary index d.

Correspondingly, in the data filling procedure for creating the GSI online, the tuple (2, 500132, Xiao Wang, 12) can be obtained through scanning subsequently from visible data obtained from the data table D based on the snapshot. Therefore, when the corresponding data node wants to insert the corresponding tuple (12, 500132, Xiao Wang, location information, version information, partition information) into the global secondary index d, the corresponding data node in this case can quickly position a storage location with the same index key in the global secondary index d based on the index key (class ID). After scanning and comparison, it is found that the same data content row (12, 500132, Xiao Wang, location information, version information, partition information) on all the columns (the distribution key, index key, additional key, location information, version information, partition information) exists in the global secondary index d. Then, insertion is skipped and returning is directly performed.

In this way, after creation of the global secondary index d is completed, the data row deleted in the data table D during creation of the global secondary index d is also deleted in the global secondary index d, and the data is consistent.

In still another scenario, after a row of data (tuple) is updated in the data table D through processing of an UPDATE operation, the data node of the global secondary index d may update the corresponding data row in the global secondary index d. In an example, a tuple (2, 500132, Xiao Wang, 12) is updated to (2, 500132, Xiao Li, 12) in the data table D based on a condition studentid=12. The tuple update operation on the data table D may be performed by using an SQL statement "UPDATE D SET name="Xiao Li" WHERE studentid=12 RETURNING student_new, docid_new, name_new, classid_new, location information_new, version information_new, partition information_new, student, docid, name, classid, location information, version information, partition information". A meaning of the statement is to update the tuple (2, 500132, Xiao Wang, 12) to (2, 500132, Xiao Li, 12) based on the update condition, and return data content before and after the update in all columns, including the class ID, student name, student ID, location information, version information, and partition information. The SQL statement may be calculated by the coordinator node 2 based on the distribution key student ID by using a hash algorithm, and then sent to the corresponding data node for execution.

Then, a data update operation on the global secondary index d may be performed by using an SQL statement "UPDATE d SET classid=$4 AND docid=$2 AND name=$3 AND location information=$5 AND version information=$6 AND partition information=$7 WHERE classid=$11 AND docid=$9 AND name=$10 AND location information=$12 AND version information=$13 AND partition information=$14". A meaning of the statement is to extract the required class ID, document ID, student name, location information, version information, and partition information from the returned data content as the update condition, and updates the corresponding tuple (12, 500132, Xiao Wang, location information, version information, partition information) to (12, 500132, Xiao Li, location information, location information_new, version information_new, partition information_new) in the global secondary index d. The SQL statement may be calculated based on the distribution key class ID by using a hash algorithm by the coordinator node 2 or the data node that executes the update operation on the data table D, and sent to the corresponding data node for execution the update operation.

When the data node updates the corresponding data in the global secondary index d, the update operation is divided into two steps of deleting the old tuple and inserting the new tuple. To be specific, the old tuple (12, 500132, Xiao Wang, location information, version information, partition information) is deleted first, and then the new tuple (12, 500132, Xiao Li, location information, location information_new, version information_new, partition information_new) is inserted. Particularly, when the old tuple is to be deleted, for the foregoing DELETE operation, Case 2 may occur, that is, the corresponding tuple cannot be found in the global secondary index d. The corresponding processing method is the same as the foregoing description, and details are not described again.

In this way, after creation of the global secondary index d is completed, the data row updated in the data table D during creation of the global secondary index d is also updated in the global secondary index d, and the data is consistent.

Finally, the coordinator node 1 notifies and waits for all the nodes to complete update of the metadata of the global secondary index d, and submits the transaction 2. In this step, the coordinator node 1 generates a metadata version modification command and delivers the metadata version modification command to all the other coordinator nodes and data nodes. The metadata version modification command may be an SQL statement ALTER INDEX {d} GSIVAILD. Each node executes the command to set the metadata version to available (public), and then gives feedback to coordinator node 1 for processing completion. Setting to the version available (public) may be setting a status flag bit (indisvalid) corresponding to the global secondary index d on the system catalog to TRUE. After confirming the feedback from all the other nodes, the coordinator node 1 sets the metadata version on the coordinator node 1 to public. The coordinator node 1 submits the transaction 2, and the metadata version of the global secondary index d is unified globally in this case. Creation of the global secondary index d ends.

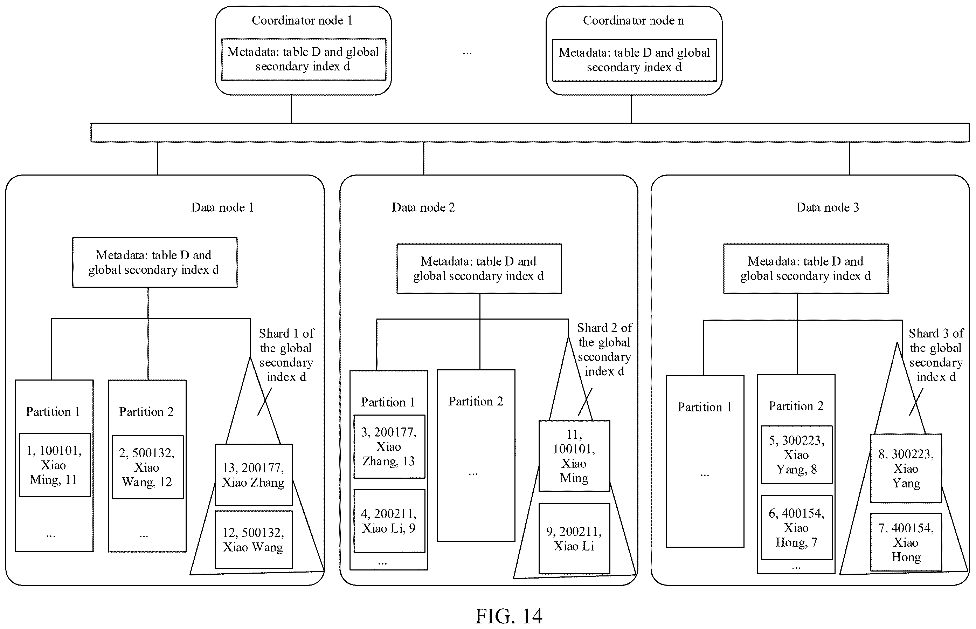

For example, after online creation of the global secondary index d on the data table D is completed, data distribution of the data in the global secondary index d in the distributed system may be shown in FIG. 14. The global secondary index d is sharded into a shard 1 (including data of the classid [13, 12, ...]) of the global secondary index d, a shard 2 (including data of the classid [11, 9, ...]) of the global secondary index d, and a shard 3 (including data of the classid [8, 7, ...]) of the global secondary index d. The shard 1 of the global secondary index d is stored on a data node 1, the shard 2 of the global secondary index d is stored on a data node 2, and the shard 3 of the global secondary index d is stored on a data node 3.

As shown in FIG. 13, each shard of the global secondary index d is a data structure sorted by using the index key classid defined by the user. In this way, when the user performs query based on the classid, the user can quickly query desired data based on the global secondary index d.

Embodiments of this application provide the method for creating the index. During online creation of the global secondary index in the distributed system, the coordinator node needs to notify and wait for all the nodes to complete update of the metadata, and then starts to update the metadata of the coordinator node, thereby implementing global consistency in the metadata non-asynchronous (synchronous) update mechanism. This can ensure high concurrent performance of the distributed system, and ensure high availability of the distributed system, without introducing a third-party node/tool that is already with a high concurrent access load for coordinating metadata asynchronous update. The coordinator node needs to wait for and obtain normal feedback of all the nodes, and then continues the procedure, without hindering normal execution of the user DML transaction. In addition, an architecture design is simple, and costs is low, without introducing the third-party node/tool for coordinating metadata update. In addition, in the solution provided in this application, during online creation of the global secondary index in the distributed system, the coordinator node needs to notify and wait for all the nodes to wait for completion of the currently active transaction, and then start index data filling, to ensure data consistency. In addition, the coordinator node waits for and obtains the normal feedback of all the nodes, and then continues the procedure, without hindering normal execution of the user DML transaction, thereby ensuring high availability.

It may be understood that, to implement the foregoing functions, the coordinator node includes corresponding hardware and/or software modules for performing the functions. With reference to algorithm steps of examples described in embodiments disclosed in this specification, this application can be implemented in a form of hardware or a combination of hardware and software. Whether a function is performed by the hardware or hardware driven by software depends on particular applications and design constraints of the technical solutions. A person skilled in the art may use different methods to implement the described functions for each specific application with reference to embodiments. However, it should not be considered that the implementation goes beyond the scope of this application.

In this embodiment, the coordinator node may be divided into function modules based on the foregoing method examples. For example, each function module may be obtained through division based on each function, or two or more functions may be integrated into one processing module. The integrated module may be implemented in a form of hardware. It should be noted that division into the modules in embodiments is an example and is merely logical function division. In practice, there may be another division manner.

An embodiment of this application further provides an apparatus for creating an index in a distributed system. The apparatus may be used in any coordinator node in the distributed system. The apparatus is configured to perform functions or steps performed by the coordinator node in the foregoing method embodiments.

An embodiment of this application further provides a coordinator node in a distributed system. The coordinator node includes the apparatus for creating the index. Optionally, the coordinator node may be an independent server, or may be a virtual machine in the server.

An embodiment of this application further provides a chip system. The chip system includes a processor and at least one interface circuit. The processor and the interface circuit may be interconnected through a line. The interface circuit may read instructions stored in a memory, and send the instructions to the processor. When the instructions are executed by the processor, the chip system can be enabled to perform the functions or steps performed by the coordinator node in the foregoing method embodiments. Certainly, the chip system may further include another discrete component. This is not specifically limited in embodiments of this application.

An embodiment of this application further provides a storage medium. The storage medium includes instructions. When the instructions are run on the apparatus for creating the index, the apparatus for creating the index is enabled to perform the functions or steps performed by the coordinator node in the foregoing method embodiments.

The apparatus for creating the index, the coordinator node, the storage medium, or the chip provided in embodiments is configured to perform the corresponding method provided above. Therefore, for beneficial effect that can be achieved, refer to the beneficial effect in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for creating an index in a distributed system, applied to a coordinator node in the distributed system, wherein the distributed system further comprises a plurality of other nodes, and the method comprises:
during online creation of a global secondary index GSI, notifying the plurality of other nodes to configure metadata of the global secondary index, wherein the metadata comprises a metadata version, and the configuration is used to update and/or generate the metadata; and
when the coordinator node meets a preset condition, configuring the metadata of the global secondary index on the coordinator node.

2. The method according to claim 1, wherein the preset condition comprises that completion feedback information returned by each of the plurality of other nodes is received.

3. The method according to claim 1 or 2, wherein the distributed system further comprises a client, and during online creation of the global secondary index, notifying the plurality of other nodes to generate the metadata of the global secondary index comprises:
receiving an index creation request from the client, wherein the index creation request indicates to create the global secondary index online; and
in response to the index creation request, notifying the plurality of other nodes to create and initialize the metadata of the global secondary index and set the metadata version of the metadata to a first version; and
when the coordinator node meets the preset condition, generating the metadata of the global secondary index on the coordinator node comprises:
when the coordinator node meets the preset condition, creating and initializing the metadata of the global secondary index on the coordinator node, and setting the metadata version of the metadata to the first version.

4. The method according to claim 1 or 2, wherein during online creation of the global secondary index, notifying the plurality of other nodes to update the metadata of the global secondary index comprises:
when the coordinator node and the plurality of other nodes all complete setting the metadata version of the metadata of the global secondary index to a first version, notifying the plurality of other nodes to update the metadata version from the first version to a second version; and
when the coordinator node meets the preset condition, updating the metadata of the global secondary index on the coordinator node comprises:
when the coordinator node meets the preset condition, updating the metadata version from the first version to the second version on the coordinator node.

5. The method according to claim 1 or 2, wherein the global secondary index is associated with a field in a data table, and during online creation of the global secondary index, notifying the plurality of other nodes to update the metadata of the global secondary index comprises:
filling related data in the data table into the global secondary index when the coordinator node and the plurality of other nodes all complete setting the metadata version of the metadata of the global secondary index to a first version; and
when data filling of the global secondary index is completed, notifying the plurality of other nodes to update the metadata version from the first version to a second version; and
when the coordinator node meets the preset condition, updating the metadata of the global secondary index on the coordinator node comprises:
when the coordinator node meets the preset condition, updating the metadata version from the first version to the second version on the coordinator node.

6. The method according to claim 4 or 5, wherein the global secondary index is associated with the field in the data table, and after the coordinator node and the plurality of other nodes all complete setting the metadata version of the metadata of the global secondary index to the first version, the method further comprises:
waiting for end of all transactions of the data table on the coordinator node and the plurality of other nodes.

7. The method according to claim 1 or 2, wherein the distributed system further comprises a client, the preset condition comprises a first preset condition and a second preset condition, and during online creation of the global secondary index, notifying the plurality of other nodes to configure the metadata of the global secondary index, and when the coordinator node meets the preset condition, configuring the metadata of the global secondary index on the coordinator node comprises:
receiving an index creation request from the client, wherein the index creation request indicates to create, online, the global secondary index associated with a field in a data table;
in response to the index creation request, notifying the plurality of other nodes to create and initialize the metadata of the global secondary index and set the metadata version of the metadata to a first version, wherein the first version indicates that the global secondary index is write only;
when the coordinator node meets the first preset condition, creating and initializing the metadata of the global secondary index on the coordinator node, and setting the metadata version of the metadata to the first version, wherein the first preset condition comprises that setting feedback information returned by each of the plurality of other nodes is received, and the setting feedback information indicates that creation and initialization of the metadata are completed and setting of the first version is completed;
waiting for end of all transactions of the data table on the coordinator node and the plurality of other nodes, and then filling related data in the data table into the global secondary index;
when data filling of the global secondary index is completed, notifying the plurality of other nodes to update the metadata version from the first version to a second version, wherein the second version indicates that the global secondary index is normally available; and
when the coordinator node meets the second preset condition, updating the metadata version from the first version to the second version on the coordinator node, wherein the second preset condition comprises that update feedback information returned by each of the plurality of other nodes is received, and the update feedback information indicates that update to the second version is completed.

8. The method according to claim 6 or 7, wherein waiting for end of all the transactions of the data table on the coordinator node and the plurality of other nodes comprises:
notifying the plurality of other nodes to wait for end of all the transactions of the data table; and
when the coordinator node meets a specified condition, waiting for end of all the transactions of the data table on the coordinator node, wherein the specified condition comprises that waiting feedback information returned by each of the plurality other nodes is received, and the waiting feedback information indicates that waiting for end of all the transactions on the data table is completed.

9. The method according to any one of claims 1 to 8, wherein notifying the plurality of other nodes to configure the metadata of the global secondary index comprises:
sending a structured query language SQL instruction to the plurality of other nodes, wherein the SQL instruction instructs the plurality of other nodes to configure the metadata of the global secondary index.

10. A distributed system, wherein the distributed system comprises a coordinator node and a plurality of other nodes;
the coordinator node is configured to send an instruction to the plurality of other nodes during online creation of a global secondary index, wherein the instruction instructs the plurality of other nodes to configure metadata of the global secondary index, the metadata comprises a metadata version, and the configuration is used to update and/or generate the metadata;
each of the plurality of other nodes is configured to: receive the instruction, and configure the metadata of the global secondary index on the node in response to the instruction; and
the coordinator node is further configured to configure the metadata of the global secondary index on the coordinator node when the coordinator node meets a preset condition.

11. The system according to claim 10, wherein each of the plurality of other nodes is further configured to: return completion feedback information to the coordinator node when completing the configuration of the metadata of the global secondary index on the node; and
the coordinator node is further configured to: when receiving the completion feedback information returned by each of the plurality of other nodes, determine that the coordinator node meets the preset condition.

12. The system according to claim 10 or 11, wherein the instruction comprises a first instruction, and the first instruction instructs the plurality of other nodes to generate the metadata of the global secondary index;
the distributed system further comprises a client;
the client is configured to send an index creation request, wherein the index creation request indicates to create the global secondary index online;
the coordinator node is configured to: receive the index creation request, and send the first instruction to the plurality of other nodes in response to the index creation request;
each of the plurality of other nodes is configured to: receive the first instruction; and in response to the first instruction, create and initialize the metadata of the global secondary index on the node, and set the metadata version of the metadata to a first version; and
the coordinator node is further configured to: when the coordinator node meets the preset condition, create and initialize the metadata of the global secondary index on the coordinator node, and set the metadata version of the metadata to the first version.

13. The system according to claim 10 or 11, wherein the instruction comprises a second instruction, and the second instruction instructs the plurality of other nodes to update the metadata of the global secondary index;
the coordinator node is configured to send the second instruction to the plurality of other nodes when the coordinator node and the plurality of other nodes all complete setting the metadata version of the metadata of the global secondary index to a first version;
each of the plurality of other nodes is configured to: receive the second instruction, and update the metadata version from the first version to a second version on the node in response to the second instruction; and
the coordinator node is further configured to: when the coordinator node meets the preset condition, update the metadata version from the first version to the second version on the coordinator node.

14. The system according to claim 10 or 11, wherein the global secondary index is associated with a field in a data table, the instruction comprises a second instruction, and the second instruction instructs the plurality of other nodes to update the metadata of the global secondary index;
the coordinator node is configured to: fill related data in the data table into the global secondary index when the coordinator node and the plurality of other nodes all complete setting the metadata version of the metadata of the global secondary index to a first version; and send the second instruction to the plurality of other nodes when data filling of the global secondary index is completed;
each of the plurality of other nodes is configured to: receive the second instruction, and update the metadata version from the first version to a second version on the node in response to the second instruction; and
the coordinator node is further configured to: when the coordinator node meets the preset condition, update the metadata version from the first version to the second version on the coordinator node.

15. The system according to claim 13 or 14, wherein the global secondary index is associated with the field in the data table, and the coordinator node is further configured to: after the coordinator node and the plurality of other nodes all complete setting to the first version of the metadata version of the metadata of the global secondary index, wait for end of all transactions of the data table on the coordinator node and the plurality of other nodes.

16. The system according to claim 10 or 11, wherein the preset condition comprises a first preset condition and a second preset condition, the instruction comprises a first instruction and a second instruction, the first instruction instructs the plurality of other nodes to generate the metadata of the global secondary index, and the second instruction instructs the plurality of other nodes to update the metadata of the global secondary index;
the distributed system further comprises a client;
the client is configured to send an index creation request, wherein the index creation request indicates to create, online, the global secondary index associated with a field in a data table;
the coordinator node is configured to: receive the index creation request, and send the first instruction to the plurality of other nodes in response to the index creation request;
each of the plurality of other nodes is configured to: receive the first instruction; and in response to the first instruction, create and initialize the metadata of the global secondary index on the node, and set the metadata version of the metadata to a first version, wherein the first version indicates that the global secondary index is write only;
each of the plurality of other nodes is further configured to return setting feedback information to the coordinator node when creation and initialization of the metadata and setting to the first version are completed on the node;
the coordinator node is further configured to: when receiving the setting feedback information returned by each of the plurality of other nodes, determine that the coordinator node meets the first preset condition; and when the coordinator node meets the first preset condition, create and initialize the metadata of the global secondary index on the coordinator node, and set the metadata version of the metadata to the first version;
the coordinator node is further configured to: wait for end of all transactions of the data table on the coordinator node and the plurality of other nodes; and then fill related data in the data table into the global secondary index, and send the second instruction to the plurality of other nodes when data filling of the global secondary index is completed;
each of the plurality of other nodes is further configured to: receive the second instruction, and update the metadata version from the first version to a second version on the node in response to the second instruction, wherein the second version indicates that the global secondary index is normally available;
each of the plurality of other nodes is further configured to return update feedback information to the coordinator node when the node completes update to the second version; and
the coordinator node is further configured to: when receiving the update feedback information returned by each of the plurality of other nodes, determine that the coordinator node meets the second preset condition; and when the coordinator node meets the second preset condition, update the metadata version from the first version to the second version on the coordinator node.

17. The system according to claim 15 or 16, wherein the instruction further comprises a third instruction, and the third instruction instructs the plurality of other nodes to wait for end of all the transactions of the data table;
the coordinator node is further configured to send the third instruction to the plurality of other nodes;
each of the plurality of other nodes is further configured to: receive the third instruction, and in response to the third instruction, wait for end of all the transactions of the data table on the node;
each of the plurality of other nodes is further configured to: when waiting for end of all the transactions of the data table on the node is completed, return waiting feedback information to the coordinator node; and
the coordinator node is further configured to: when receiving the waiting feedback information returned by each of the plurality of other nodes, determine that the coordinator node meets the specified condition, and when the coordinator node meets the specified condition, wait for end of all the transactions of the data table on the coordinator node.

18. The system according to any one of claims 10 to 17, wherein the instruction is a structured query language SQL instruction.

19. An apparatus for creating an index in a distributed system, used in a coordinator node in the distributed system, wherein the distributed system further comprises a plurality of other nodes, and the apparatus comprises:
a processing unit, configured to: during online creation of a global secondary index, notify the plurality of other nodes to configure metadata of the global secondary index, wherein the metadata comprises a metadata version, and the configuration is used to update and/or generate the metadata; and
the processing unit is further configured to configure the metadata of the global secondary index on the coordinator node when the coordinator node meets a preset condition.

20. A coordinator node in a distributed system, wherein the coordinator node comprises a memory and one or more processors; the memory is coupled to the processor; the memory is configured to store computer program code; the computer program code comprises computer instructions; and when the processor executes the computer instructions, the coordinator node performs the method according to any one of claims 1 to 9.

21. A chip system, wherein the chip system comprises one or more interface circuits and a processor; the interface circuit and the processor are interconnected through a line; the interface circuit is configured to: receive a signal, and send the signal to the processor, wherein the signal comprises instructions; and when the processor executes the instructions, the chip system performs the method according to any one of claims 1 to 9.

22. A computer-readable storage medium, comprising computer instructions, wherein when the computer instructions are run on a computer, the computer is enabled to perform the method according to any one of claims 1 to 9.
